(19) **Europäisches Patentamt / European Patent Office / Office européen des brevets**

(11) **EP 4 707 310 A1**

(12) # EUROPEAN PATENT APPLICATION

(43) Date of publication:
**11.03.2026 Bulletin 2026/11**

(21) Application number: **24199470.6**

(22) Date of filing: **10.09.2024**

(51) International Patent Classification (IPC):
**C08F 210/06** (2006.01)   **C08F 8/00** (2006.01)
**C08F 2/00** (2006.01)   **C08F 4/649** (2006.01)

(52) Cooperative Patent Classification (CPC):
(C-Sets available)
**C08F 210/06; C08F 8/00;** C08F 2810/10;
C08F 2810/20   (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
• **MOLNAR, Janos**
**4021 Linz (AT)**
• **WANG, Jingbo**
**4021 Linz (AT)**
• **GAHLEITNER, Markus**
**4021 Linz (AT)**
• **ROMANENKO, Yuliia**
**4021 Linz (AT)**
• **LUMMERSTORFER, Thomas**
**4021 Linz (AT)**

(74) Representative: **Maiwald GmbH**
**Elisenhof**
**Elisenstraße 3**
**80335 München (DE)**

(54) **MELT FLOW RATE REDUCTION OF HETEROPHASIC PROPYLENE COPOLYMER RESIN BY RADICAL REACTION**

(57)    The present invention relates to a heterophasic propylene copolymer composition comprising a content of a fraction insoluble in hot xylene (XHU fraction) of at least 1.5 wt.-%, based on the total weight of the heterophasic propylene copolymer composition and a fraction soluble in hot xylene (XHS fraction), both determined according to EN 579, wherein the heterophasic propylene copolymer composition has a melt flow rate $MFR_2$, determined according to ISO 1133 at 230°C and 2.16 kg, of from 1.0 to 100.0 g/10 min,
a process for producing said heterophasic propylene copolymer composition, in which a starting heterophasic propylene copolymer resin is mixed with a radical initiator and the mixture is extruded to obtain the heterophasic propylene copolymer composition, wherein the ratio of final melt flow rate of the heterophasic propylene copolymer composition $MFR_{2,\,final}$ to the melt flow rate of the starting heterophasic propylene copolymer resin $MFR_{2,\,start}$ is less than 1.00,
an article comprising said heterophasic propylene copolymer composition and the use of said heterophasic propylene copolymer composition as impact booster for recyclate-based polyolefin compositions.

EP 4 707 310 A1

(52) Cooperative Patent Classification (CPC): (Cont.)

C-Sets
**C08F 8/00, C08F 210/06;**
**C08F 210/06, C08F 2/001;**
**C08F 210/06, C08F 4/6492;**
**C08K 5/14, C08L 23/14;**
C08F 210/06, C08F 210/16, C08F 2500/12,
C08F 2500/27, C08F 2500/35, C08F 2500/17,
C08F 2500/34, C08F 2500/33;
C08F 210/06, C08F 210/16, C08F 2500/12,
C08F 2500/27, C08F 2500/35, C08F 2500/17,
C08F 2500/34, C08F 2500/33, C08F 2500/39,
C08F 2500/32, C08F 2500/04

## Description

The present invention relates to a heterophasic propylene copolymer composition comprising a content of a fraction insoluble in hot xylene (XHU fraction) of at least 1.5 wt.-%, based on the total weight of the heterophasic propylene copolymer composition and a fraction soluble in hot xylene (XHS fraction), both determined according to EN 579, wherein the heterophasic propylene copolymer composition has a melt flow rate $MFR_2$, determined according to ISO 1133 at 230°C and 2.16 kg, of from 1.0 to 100.0 g/10 min, a process for producing said heterophasic propylene copolymer composition in which a starting heterophasic propylene copolymer resin is mixed with a radical initiator and the mixture is extruded to obtain the heterophasic propylene copolymer composition, wherein the ratio of final melt flow rate of the heterophasic propylene copolymer composition $MFR_{2, final}$ to the melt flow rate of the starting heterophasic propylene copolymer resin $MFR_{2, start}$ is less than 1.00, an article comprising said heterophasic propylene copolymer composition and the use of said heterophasic propylene copolymer composition as impact booster for recyclate-based polyolefin compositions.

## Technical background

Propylene polymers are used in a broad variety of demanding applications, such as automotive applications, construction, medical applications or packaging due to their excellent properties and low costs. The demands can be challenging, since many polymer properties are directly or indirectly interrelated, i.e. improving a specific property can only be accomplished on the expense of another property. Stiffness can for instance be improved by increasing the crystallinity and/or the relative amount of homopolymer within the composition. As a consequence, the material becomes more brittle, thereby resulting in poor impact properties.

Multiphase polypropylene materials are a general concept for combining stiffness and impact strength over a wide temperature range, with heterophasic propylene copolymers combining a crystalline propylene polymer matrix with a dispersed amorphous propylene copolymer phase being the most relevant class.

Phase structure stability during compounding and processing is a long standing issue, as the phase structure is related to surface quality (e.g. tigerstripe avoidance) and paintability, but also dimensional stability.

For improving phase structure stability, reactive modification of propylene copolymers is a measure discussed in the art. Generally two approaches are known for reactive modification:

During vis-breaking the polymer chains of the propylene copolymer are degraded in the presence of an organic peroxide thereby increasing the melt flow rate of the modified propylene copolymers. Visbreaking of heterophasic propylene copolymer compositions is described for example in EP 1 244 717 B1.

It is generally accepted that crosslinking of the propylene copolymers of the dispersed phase is not possible without very specific measures. Previous routes of reactive modification having been found to be frequently too expensive or too complex for large-scale production.

For example, in EP 1 781 736 B1 reactive modification of polypropylene compositions comprising a heterophasic propylene copolymer and an elastomeric ethylene-based copolymer is described in which the polypropylene composition is modified by crosslinking with multifunctional unsaturated monomer or low molecular weight polymer, such as butadiene, as crosslinker the presence of an organic peroxide (so-called Daploy reactive modification process).

A corresponding reactive modification of post-consumer recycled polyolefin blends with the Daploy reactive modification process is described in WO 2023/222621 A1.

An alternative approach to reactive modification of polypropylene compositions comprising a heterophasic propylene copolymer is presented in EP 3 347 389 B1, where a compatibilizing agent comprising two or more functional groups capable of reacting with a free radical in a radical addition reaction and a substance for generating said free radicals are combined with a specific heterophasic polymer composition. Like in the Daploy process, two modifiers have to be used, the residuals of which are likely to remain in the final composition.

Thus, there is a need in the art for a new approach of rheological modification of heterophasic propylene copolymers by means of crosslinking especially of the elastomeric phase of the heterophasic propylene copolymer, which is reliable, easy to achieve and cost sensitive.

It has surprisingly been found that mixing a heterophasic propylene copolymer with a rather high melt flow rate $MFR_2$ in the general range of from 5.0 to 500.0 g/10 min with a radical initiator having high activity at rather low temperature but a rather low active oxygen ($O_2$) content can give a reduction of the melt flow rate $MFR_2$ and an improvement in impact strength by initiating a crosslinking reaction instead of a vis-breaking reaction as would be expected in the absence of a multifunctional unsaturated monomer or low molecular weight polymer, such as butadiene, or another compatibilizing agent comprising two or more functional groups as crosslinker. The crosslinking reaction can be identified in the modified heterophasic propylene copolymer compositions by the presence of a fraction insoluble in hot xylene (XHU fraction), determined according to EN 579.

**EP 4 707 310 A1**

## Summary of the invention

In a first aspect the present invention relates to a heterophasic propylene copolymer composition comprising

a content of a fraction insoluble in hot xylene (XHU fraction), determined according to EN 579, of at least 1.5 wt.-%, such as from 1.5 to 10.0 wt.-%, preferably from 1.7 to 7.5 wt.-%, more preferably from 2.0 to 5.0 wt.-%, based on the total weight of the heterophasic propylene copolymer composition; and

a fraction soluble in hot xylene (XHS fraction), determined according to EN 579, whereby the XHU fraction and the XHS fraction make up 100 wt.-% of the heterophasic propylene copolymer composition;

wherein the XHS fraction has

a content of soluble fraction (SF), determined by crystallization extraction (CRYSTEX), of from 12.0 to 35.0 wt.-%, preferably from 13.5 to 32.5 wt.-%, more preferably from 14.5 to 30.0 wt.-%, based on the total weight of the XHS fraction,

said soluble fraction has a comonomer content, preferably an ethylene content (C2(SF)), determined from crystallization extraction (CRYSTEX) calibrated by $^{13}$C NMR spectroscopy, of from 43.0 to 70.0 wt.-%, preferably from 45.0 to 67.5 wt.-%, more preferably from 47.5 to 65.0 wt.-%, based on the total weight of the soluble fraction, and the heterophasic propylene copolymer composition has a melt flow rate $MFR_2$, determined according to ISO 1133 at 230°C and 2.16 kg, of from 1.0 to 100.0 g/10 min, preferably from 5.0 to 95.0 g/10 min, more preferably from 8.0 to 90.0 g/10 min.

In a second aspect the present invention relates to a process for producing a heterophasic propylene copolymer composition as described above or below comprising the steps of:

a) providing a starting heterophasic propylene copolymer resin ($HECO_{start}$) having

- a melt flow rate $MFR_{2, start}$, determined according to ISO 1133 at 230°C and 2.16 kg, of from 5.0 to 500 g/10 min, preferably from 25.0 to 475 g/10 min, more preferably from 50.0 to 450 g/10 min,
- a content of soluble fraction (SF), determined by crystallization extraction (CRYSTEX), of from 12.5 to 35.0 wt.-%, preferably from 15.0 to 32.5 wt.-%, more preferably from 16.5 to 30.0 wt.-%, based on the total weight of $HECO_{start}$;
- a comonomer content of said soluble fraction, preferably an ethylene content of said soluble fraction (C2(SF)), determined from crystallization extraction (CRYSTEX) calibrated by $^{13}$C NMR spectroscopy, of from 45.0 to 75.0 wt.-%, preferably from 50.0 to 72.5 wt.-%, more preferably from 52.5 to 70.0 wt.-%, based on the total weight of the soluble fraction; and
- no detectable fraction insoluble in hot xylene (XHU fraction), determined according to EN 579;

b) adding a radical initiator in an effective amount of from 0.001 to 1.500 wt.-%, preferably from 0.005 to 1.000 wt.-%, more preferably from 0.010 to 0.750 wt.-%, based on the total weight of the mixture of radical initiator and $HECO_{start}$, to $HECO_{start}$ to provide a mixture of radical initiator and $HECO_{start}$, whereby the radical initiator has

- a decomposition half-time of 1 h at less than 100°C, such as at 30 to less than 100°C, preferably at 40 to 90°C, more preferably at 50 to 75°C; and
- an active oxygen content of less than 10.0%, such as from 1.0 to less than 10.0%, preferably from 2.0 to 8.5%, more preferably from 2.5 to 7.5%;

c) extruding the mixture of radical initiator and $HECO_{start}$ to obtain the heterophasic propylene copolymer composition having a final melt flow rate $MFR_{2, final}$, determined according to ISO 1133 at 230°C and 2.16 kg, of from 1.0 to 100.0 g/10 min, preferably from 5.0 to 95.0 g/10 min, more preferably from 8.0 to 90.0 g/10 min,

wherein the ratio of $MFR_{2, final}$ to $MFR_{2, start}$ is less than 1.00, such as from 0.05 to less than 1.00, preferably from 0.10 to 0.80, more preferably from 0.15 to 0.75.

In a third aspect the present invention relates to an article, preferably an injection moulded article, more preferably an automotive article, comprising the heterophasic propylene copolymer composition as described above or below.

In a fourth aspect the present invention relates to the use of the heterophasic propylene copolymer composition as described above or below as impact booster for recyclate-based polyolefin compositions.

4

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

In the following, amounts are given in % by weight (wt.-%) unless it is stated otherwise.

A heterophasic polypropylene is a propylene-based copolymer with a crystalline matrix phase, which can be a propylene homopolymer or a random copolymer of propylene and at least one alpha-olefin comonomer, and an elastomeric phase dispersed therein. The elastomeric phase can be a propylene copolymer with a high amount of comonomer, which is not randomly distributed in the polymer chain but are distributed in a comonomer-rich block structure and a propylene-rich block structure.

A heterophasic polypropylene usually differentiates from a one-phasic propylene copolymer in that it shows two distinct glass transition temperatures Tg which are attributed to the matrix phase and the elastomeric phase respectively.

A propylene homopolymer is a polymer, which essentially consists of propylene monomer units. Due to impurities especially during commercial polymerization processes a propylene homopolymer can comprise up to 0.1 mol-% comonomer units, preferably up to 0.05 mol-% comonomer units and most preferably up to 0.01 mol-% comonomer units.

A propylene copolymer is a copolymer of propylene monomer units and comonomer units, preferably selected from ethylene and $C_4$-$C_8$ alpha-olefins, in the present case ethylene. A propylene random copolymer is a propylene copolymer wherein the comonomer units are randomly distributed along the polymer chain, whilst a propylene block copolymer comprises blocks of propylene monomer units and blocks of comonomer units. Propylene random copolymers can comprise comonomer units from one or more comonomers different in their amounts of carbon atoms.

Usually, a propylene polymer comprising at least two propylene polymer fractions (components), which have been produced under different polymerization conditions resulting in different (weight average) molecular weights and/or different comonomer contents for the fractions, preferably produced by polymerizing in multiple polymerization stages with different polymerization conditions, is referred to as "multimodal". The prefix "multi" relates to the number of different polymer fractions the propylene polymer is consisting of. As an example of multimodal propylene polymer, a propylene polymer consisting of two fractions only is called "bimodal", whereas a propylene polymer consisting of three fractions only is called "trimodal".

A unimodal propylene polymer only consists of one fraction.

Thereby, the term "different" means that the propylene polymer fractions differ from each other in at least one property, preferably in the weight average molecular weight - which can also be measured in different melt flow rates of the fractions - or comonomer content or both.

An elastomer is a polymer with viscoelasticity and weak intermolecular forces. The term "elastomer" can be used interchangeably with "rubber".

Polyolefin based elastomers, such as polypropylene based elastomers, or polyethylene-based elastomers, i.e. an elastomer with a molar majority of olefin monomer units, such as propylene monomer units or ethylene monomer units, are usually thermoplastic elastomers.

In a heterophasic polypropylene a matrix phase and a dispersed phase usually form due to the differences in intrinsic viscosity of the crystalline polypropylene compound forming the matrix phase and the elastomeric copolymer forming the dispersed phase, which reduces their miscibility.

**Detailed description of the invention**

Heterophasic propylene copolymer composition

In a first aspect the present invention relates to a heterophasic propylene copolymer composition comprising

a content of a fraction insoluble in hot xylene (XHU fraction), determined according to EN 579, of at least 1.5 wt.-%, such as from 1.5 to 10.0 wt.-%, preferably from 1.7 to 7.5 wt.-%, more preferably from 2.0 to 5.0 wt.-%, based on the total weight of the heterophasic propylene copolymer composition; and
a fraction soluble in hot xylene (XHS fraction), determined according to EN 579, whereby the XHU fraction and the XHS fraction make up 100 wt.-% of the heterophasic propylene copolymer composition;
wherein the XHS fraction has
a content of soluble fraction (SF), determined by crystallization extraction (CRYSTEX), of from 12.0 to 35.0 wt.-%, preferably from 13.5 to 32.5 wt.-%, more preferably from 14.5 to 30.0 wt.-%, based on the total weight of the XHS fraction,

said soluble fraction has a comonomer content, preferably an ethylene content (C2(SF)), determined from crystallization extraction (CRYSTEX) calibrated by $^{13}$C NMR spectroscopy, of from 43.0 to 70.0 wt.-%, preferably from 45.0 to 67.5 wt.-%, more preferably from 47.5 to 65.0 wt.-%, based on the total weight of the soluble fraction, and the heterophasic propylene copolymer composition has a melt flow rate $MFR_2$, determined according to ISO 1133 at 230°C and 2.16 kg, of from 1.0 to 100.0 g/10 min, preferably from 5.0 to 95.0 g/10 min, more preferably from 8.0 to 90.0 g/10 min.

The heterophasic propylene copolymer composition preferably comprises a heterophasic propylene copolymer in an amount of from 90.0 to 99.9 wt.-%, preferably from 92.5 to 99.8 wt.-%, most preferably from 95.0 to 99.7 wt.-% based on the total weight of the heterophasic propylene copolymer composition.

The polypropylene composition can further comprise polymeric components, which are different from the heterophasic propylene copolymer, in an amount of preferably 0.0 to 10.0 wt.-% based on the total weight of the heterophasic propylene copolymer composition.

In a preferred embodiment the polymeric components of the heterophasic propylene copolymer composition consist of the heterophasic propylene copolymer.

Besides these polymeric components the heterophasic propylene copolymer composition can comprise one or more additives in an amount of from 0.1 up to 5.0 wt.-%, based on the total weight of the heterophasic propylene copolymer composition. The one or more additives are preferably selected from acid scavengers, antioxidants, alpha nucleating agents, beta nucleating agents, etc. Such additives are commercially available and for example described in "Plastic Additives Handbook", 6th edition 2009 of Hans Zweifel (pages 1141 to 1190).

Usually, these additives are added in quantities of 1 to 10,000 ppm for each single component.

Preferably, the heterophasic propylene copolymer composition contains from 0 to 4.00 wt.-%, more preferably from 0 to 2.50 wt.-% of the alpha-nucleating agent, based on the total amount of the heterophasic propylene copolymer composition.

The amount of pure alpha-nucleating agent in the heterophasic propylene copolymer composition (without optional carrier polymer of a master batch) is preferably in the range of from 0 to 5000 ppm, more preferably from 0 to 4000 ppm, based on the total amount of the heterophasic propylene copolymer composition.

The alpha-nucleating agent is generally not restricted.

Preferably, the alpha-nucleating agent is selected from soluble alpha-nucleating agents and polymeric alpha-nucleating agents.

The alpha-nucleating agent is preferably selected from the group consisting of

(i) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3-trideoxy-4,6:5,7-bis-O-[(4-propylphenyl)methylene]-nonitol, and
(ii) vinylcycloalkane polymer and vinylalkane polymer (as discussed in more detail below), and
(iii) mixtures thereof.

The alpha-nucleating agent is preferably selected from the group consisting of dibenzylidenesorbitol (e.g. 1,3 : 2,4 dibenzylidene sorbitol), dibenzylidenesorbitol derivative, preferably dimethyldibenzylidenesorbitol (e.g. 1,3 : 2,4 di(methylbenzylidene) sorbitol), or substituted nonitol-derivatives, such as 1,2,3-trideoxy-4,6:5,7-bis-O-[(4-propylphenyl)methylene]-nonitol, vinylcycloalkane polymer, vinylalkane polymer, and mixtures thereof.

Especially preferred are vinylcycloalkane polymers such as e.g. vinylcyclohexane (VCH) polymers. Such polymers can be added e.g. using Borealis Nucleation Technology (BNT).

The alpha-nucleating agent can be added to the polypropylene composition as an isolated raw material or in a mixture with a carrier polymer, i.e. in a so-called master batch. The amount of the carrier polymer of the master batch thereby is calculated to the amount of the alpha-nucleating agent.

In one embodiment the heterophasic propylene copolymer composition comprises an alpha-nucleating agent.

In said embodiment, the amount of pure alpha-nucleating agent is preferably in the range of from 0.1 to 5000 ppm, more preferably from 1 to 5000 ppm.

In another embodiment, the heterophasic propylene copolymer composition does not comprise an alpha-nucleating agent.

In said embodiment, the amount of pure alpha-nucleating agent is 0 ppm.

The one or more additives can be added to the polymeric components in a blending step.

Thereby, the one or more additives can be added to the polymeric components in form of master batches in which one or more additives are blended with a carrier polymer in concentrated amounts. Any optional carrier polymer is calculated to the amount of additives, based on the total weight of the heterophasic propylene copolymer composition.

The heterophasic propylene copolymer composition is characterized in the presence of a content of a fraction insoluble in hot xylene (XHU fraction), determined according to EN 579, of at least 1.5 wt.-%, such as from 1.5 to 10.0 wt.-%, preferably from 1.7 to 7.5 wt.-%, more preferably from 2.0 to 5.0 wt.-%, based on the total weight of the heterophasic propylene copolymer composition.

The heterophasic propylene copolymer composition further comprises a fraction soluble in hot xylene (XHS fraction), determined according to EN 579.

The XHU fraction and the XHS fraction make up 100 wt.-% of the heterophasic propylene copolymer composition.

Consequently, the content of the XHS fraction is not more than 98.5 wt.-%, such as from 90.0 to 98.5 wt.-%, preferably from 92.5 to 08.3 wt.-%, more preferably from 95.0 to 98.0 wt.-%, based on the total weight of the heterophasic propylene copolymer composition.

The heterophasic propylene copolymer composition generally has a matrix phase and an elastomeric phase dispersed in said matrix phase.

The matrix phase preferably is a propylene homopolymer.

The elastomeric phase preferably is an elastomeric copolymer of propylene and one or more comonomers selected from ethylene and alpha-olefins having from 4 to 10 carbon atoms, such as ethylene, 1-butene, 1-hexene and/or 1-octene.

It is preferred that the elastomeric copolymer of propylene and one or more comonomers is an elastomeric copolymer of propylene and ethylene.

It is preferred that the monomer units of the elastomeric copolymer of propylene and one or more comonomers consist of propylene and ethylene.

In the heterophasic propylene copolymer composition the matrix phase and the elastomeric phase usually cannot exactly be divided from each other. In order to characterize the matrix phase and the elastomeric phase of a heterophasic propylene copolymer several methods are known. One method is the crystallization extraction (CRYSTEX).

This method is described below in the determination methods section. Thereby, the polymeric part of the heterophasic propylene copolymer composition is characterized using trichlorobenzene (TCB) as a solvent. The crystalline fraction (CF) contains for the most part the matrix phase and only a small part of the elastomeric phase and the soluble fraction (SF) contains for the most part the elastomeric phase and only a small part of the matrix phase. In some cases, this method results in more useful data compared to xylene extraction, since the crystalline fraction (CF) and the soluble fraction (SF) more accurately correspond to the matrix and elastomeric phases, respectively. Due to the differences in the separation methods of xylene extraction and crystallization extraction (CRYSTEX) the properties of XCS/XCI fractions on the one hand and crystalline/soluble (CF/SF) fractions on the other hand are not exactly the same, meaning that the amounts of matrix phase and elastomeric phase can differ as well as the properties.

Generally, the crystalline fraction (CF) content and the soluble (SF) content of a composition only relate to its polymeric components, i.e. without other components, like additives, which are insoluble and therefore not part of the dissolution and crystallization cycles as described below in the determination method.

Further, the XHU fraction does not dissolve in trichlorobenzene (TCB) and therefore does not contribute to the CRYSTEX analysis.

In the present case only the XHS fraction of the heterophasic propylene copolymer composition is fully soluble in trichlorobenzene (TCB) so that the crystalline fraction (CF) content and the soluble (SF) content relate to the total content XHS fraction of the heterophasic propylene copolymer composition. Thus, the crystalline fraction (CF) content and the soluble fraction (SF) content preferably make up 100 wt.-% of the XHS fraction of the heterophasic propylene copolymer composition.

The XHS fraction of the heterophasic propylene copolymer composition has a content of soluble fraction (SF), based on the total weight of the XHS fraction and determined by crystallization extraction (CRYSTEX) of from 12.0 to 35.0 wt.-%, preferably from 13.5 to 32.5 wt.-%, more preferably from 14.5 to 30.0 wt.-%.

Said soluble fraction has a comonomer content, preferably an ethylene content (C2(SF)), determined from crystallization extraction (CRYSTEX) calibrated by $^{13}$C NMR spectroscopy, of from 43.0 to 70.0 wt.-%, preferably from 45.0 to 67.5 wt.-%, more preferably from 47.5 to 65.0 wt.-%, based on the total amount of monomer units in the soluble fraction (SF).

It is preferred that the propylene content and the ethylene content of the soluble fraction (SF) make up 100 wt.-% of the soluble fraction (SF).

Further, the soluble fraction preferably has an intrinsic viscosity (iV(SF)), determined from crystallization extraction (CRYSTEX), of from 1.0 to 3.0 dl/g, more preferably from 1.2 to 2.5 dl/g, still more preferably from 1.4 to 2.0 dl/g.

It is preferred that the XHS fraction has a content of crystalline fraction (CF) based on the total weight of the XHS fraction and determined by crystallization extraction (CRYSTEX) of from 65.0 to 88.0 wt.-%, preferably from 67.5 to 86.5 wt.-%, more preferably from 70.0 to 85.5 wt.-%.

Said crystalline fraction preferably has a comonomer content, preferably an ethylene content (C2(CF)), determined from crystallization extraction (CRYSTEX) calibrated by $^{13}$C NMR spectroscopy, of from 2.5 to 17.5 wt.-%, more preferably from 3.5 to 16.0 wt.-%, still more preferably from 4.5 to 15.0 wt.-%, based on the total amount of monomer units in the crystalline fraction (CF).

It is preferred that the propylene content and the ethylene content of the crystalline fraction (CF) make up 100 wt.-% of the crystalline fraction (CF).

Further, the crystalline fraction preferably has an intrinsic viscosity (iV(CF)), determined from crystallization extraction (CRYSTEX), of from 0.5 to 2.0 dl/g, more preferably from 0.7 to 1.8 dl/g, still more preferably from 0.9 to 1.6 dl/g.

The ratio of the intrinsic viscosities of the soluble fraction to crystalline fraction (iV(SF)/iV(CF)) is preferably greater than 1.0, such as in the range of from 1.1 to 2.5, more preferably from 1.2 to 2.2, still more preferably from 1.3 to 2.0.

The ratio of the ethylene contents of the soluble fraction to crystalline fraction (C2(SF)/C2(CF)) is preferably in the range of from 2.5 to 10.0, more preferably from 3.5 to 8.0, still more preferably from 4.0 to 6.0.

The XHS fraction preferably has a total comonomer content, preferably total ethylene content, based on the total weight of the XHS fraction, of from 5.0 to 30.0 wt.-%, more preferably from 7.5 to 27.5 wt.-%, still more preferably from 10.0 to 25.0 wt.-%, determined from crystallization extraction (CRYSTEX) calibrated by $^{13}$C NMR spectroscopy.

Further, the XHS fraction preferably has a total propylene content, based on the total weight of the XHS fraction, of from 70.0 to 95.0 wt.-%, more preferably from 72.5 to 92.5 wt.-%, still more preferably from 22.5 to 90.0 wt.-%, determined from crystallization extraction (CRYSTEX) calibrated by $^{13}$C NMR spectroscopy.

It is preferred that the monomer units of the XHS fraction consists of propylene monomer units and ethylene comonomer units, so that the propylene monomer units and the ethylene comonomer units make up 100 wt.-% of the monomer units in the XHS fraction.

It is preferred that the XHS fraction has a total intrinsic viscosity, determined from crystallization extraction (CRYSTEX), of from 0.5 to 2.2 dl/g, preferably from 0.7 to 2.0 dl/g, more preferably from 0.9 to 1.8 dl/g.

The heterophasic propylene copolymer composition has a melt flow rate MFR$_2$, determined according to ISO 1133 at 230°C and 2.16 kg of from 1.0 to 100.0 g/10 min, preferably from 5.0 to 95.0 g/10 min, more preferably from 8.0 to 90.0 g/10 min.

Further, the heterophasic propylene copolymer composition preferably has a melting temperature Tm, determined by differential scanning calorimetry (DSC) analysis according to ISO 11357, of from 155.0 to 175.0°C, more preferably from 157.5 to 172.5°C, still more preferably from 160.0 to 170.0°C.

Still further, the heterophasic propylene copolymer composition preferably has a crystallization temperature Tc, determined by differential scanning calorimetry (DSC) analysis according to ISO 11357, of from 115.0 to 135.0°C, more preferably from 117.5 to 132.5°C, still more preferably from 120.0 to 130.0°C.

The difference between the melting temperature and the crystallization temperature (Tm-Tc) is preferably in the range of from 25 to 70°C, more preferably from 30 to 60°C.

The heterophasic propylene copolymer composition preferably has a first glass transition temperature Tg1, determined by DTMA analysis according to ISO 6721-7 of from -5.0 to 5.0°C, more preferably from -2.5 to 3.5°C, still more preferably from 0.0 to 2.5°C.

Further, the heterophasic propylene copolymer composition preferably has a second glass transition temperature Tg2, determined by DTMA analysis according to ISO 6721-7 of from -57.5 to -42.5°C, more preferably from -55.0 to -45.0°C, still more preferably from -52.5 to -47.5°C

Still further, the heterophasic propylene copolymer composition preferably has a storage modulus E', determined by DTMA analysis according to ISO 6721-7 at 23°C of from 350 to 650 MPa, more preferably from 400 to 625 MPa, still more preferably from 450 to 600 MPa.

Furthermore, the heterophasic propylene copolymer composition preferably has a storage modulus E', determined by DTMA analysis according to ISO 6721-7 at 60°C of from 150 to 400 MPa, preferably from 200 to 375 MPa, more preferably from 250 to 350 MPa.

Additionally, the heterophasic propylene copolymer composition preferably has a storage modulus E', determined by DTMA analysis according to ISO 6721-7 at 90°C of from 75 to 250 MPa, preferably from 100 to 225 MPa, more preferably from 125 to 200 MPa.

For determining the molar mass properties of the matrix phase and the elastomeric phase, xylene extraction is preferably used as CRYSTEX analysis does not routinely determine GPC data.

It is preferred that the xylene cold solubles (XCS) fraction of the heterophasic propylene copolymer composition preferably has a weight average molecular weight Mw of from 125 to 500 kg/mol, more preferably from 150 to 450 kg/mol, still more preferably from 165 to 400 kg/mol, determined by Gel Permeation Chromatography (GPC) according to ISO 16014-4:2003.

Further, the xylene cold solubles (XCS) fraction of the heterophasic propylene copolymer composition preferably has a polydispersity, being the ratio of weight average molecular weight to number average molecular weight Mw/Mn, determined by Gel Permeation Chromatography (GPC) according to ISO 16014-4:2003, of from 4.0 to 10.0, preferably from 5.0 to 8.5, more preferably from 5.5 to 7.5.

It is preferred that the fraction insoluble in cold xylene (XCU fraction) of the heterophasic propylene copolymer composition preferably has a weight average molecular weight Mw of from 100 to 350 kg/mol, more preferably from 115 to 300 kg/mol, still more preferably from 125 to 250 kg/mol, determined by Gel Permeation Chromatography (GPC) according to ISO 16014-4:2003.

Further, the fraction insoluble in cold xylene (XCU fraction) of the heterophasic propylene copolymer composition preferably has a polydispersity, being the ratio of weight average molecular weight to number average molecular weight Mw/Mn, determined by Gel Permeation Chromatography (GPC) according to ISO 16014-4:2003, of from 4.5 to 10.0, preferably from 5.0 to 9.0, more preferably from 5.5 to 8.0.

It is preferred that the heterophasic propylene copolymer composition preferably has a flexural modulus, determined according to ISO 178, of from 850 to 1250 MPa, more preferably from 900 to 1150 MPa, still more preferably from 950 to 1100 MPa.

Further, the heterophasic propylene copolymer composition preferably has a Charpy notched impact strength, determined according to ISO 179 1eA at 23°C of from 1.5 to 10.0 kJ/m$^2$, more preferably from 2.0 to 8.5 kJ/m$^2$, still more preferably from 2.5 to 7.0 kJ/m$^3$.

Still further, the heterophasic propylene copolymer composition preferably has a Charpy notched impact strength, determined according to ISO 179 1eA at -20°C of from 0.5 to 6.5 kJ/m$^2$, more preferably from 1.0 to 5.0 kJ/m$^2$, still more preferably from 1.5 to 4.0 kJ/m$^2$.

The heterophasic propylene copolymer composition is preferably produced by a reactive modification reaction of a heterophasic propylene copolymer starting material in the presence of a radical initiator with a specific reaction profile. The radical initiator preferably has high activity at rather low temperature but a rather low active oxygen ($O_2$) content. Suitable radical initiators are e.g. organic peroxides with a decomposition half-time of 1 h at less than 100°C, such as at 30 to less than 100°C, preferably at 40 to 90°C, more preferably at 50 to 75°C and an active oxygen content of less than 10.0%, such as from 1.0 to less than 10.0%, preferably from 2.0 to 8.5%, more preferably from 2.5 to 7.5%.

The reactive modification reaction of the heterophasic propylene copolymer with a radical initiator with said specific reaction profile surprisingly results in a crosslinking reaction instead of a degradation reaction by vis-breaking as would be expected especially as no crosslinker, such as a multifunctional unsaturated monomer or low molecular weight polymer, is present in said reactive modification reaction.

The crosslinking reaction thereby results in the formation of the XHU fraction. Thus, the presence of the XHU fraction is an indicator for the reactive modification reaction being a crosslinking reaction.

Process

In a second aspect the present invention relates to a process for producing a heterophasic propylene copolymer composition as described above or below comprising the steps of:

a) providing a starting heterophasic propylene copolymer resin (HECO$_{start}$) having

- a melt flow rate MFR$_{2, start}$, determined according to ISO 1133 at 230°C and 2.16 kg, of from 5.0 to 500 g/10 min, preferably from 25.0 to 475 g/10 min, more preferably from 50.0 to 450 g/10 min,
- a content of soluble fraction (SF), determined by crystallization extraction (CRYSTEX), of from 12.5 to 35.0 wt.-%, preferably from 15.0 to 32.5 wt.-%, more preferably from 16.5 to 30.0 wt.-%, based on the total weight of HECO$_{start}$;
- a comonomer content of said soluble fraction, preferably an ethylene content of said soluble fraction (C2(SF)), determined by $^{13}$C NMR spectroscopy from crystallization extraction (CRYSTEX), of from 45.0 to 75.0 wt.-%, preferably from 50.0 to 72.5 wt.-%, more preferably from 52.5 to 70.0 wt.-%, based on the total weight of the soluble fraction; and
- no detectable fraction insoluble in hot xylene (XHU fraction), determined according to EN 579;

b) adding a radical initiator in an effective amount of from 0.001 to 1.500 wt.-%, preferably from 0.005 to 1.000 wt.-%, more preferably from 0.010 to 0.750 wt.-%, based on the total weight of the mixture of radical initiator and HECO$_{start}$, to HECO$_{start}$ to provide a mixture of radical initiator and HECO$_{start}$, whereby the radical initiator has

- a decomposition half-time of 1 h at less than 100°C, such as at 30 to less than 100°C, preferably at 40 to 90°C, more preferably at 50 to 75°C; and
- an active oxygen content of less than 10.0%, such as from 1.0 to less than 10.0%, preferably from 2.0 to 8.5%, more preferably from 2.5 to 7.5%;

c) extruding the mixture of radical initiator and $HECO_{start}$ to obtain the heterophasic propylene copolymer composition having a final melt flow rate $MFR_{2, final}$, determined according to ISO 1133 at 230°C and 2.16 kg, of from 1.0 to 100.0 g/10 min, preferably from 5.0 to 95.0 g/10 min, more preferably from 8.0 to 90.0 g/10 min,

wherein the ratio of $MFR_{2, final}$ to $MFR_{2, start}$ is less than 1.00, such as from 0.05 to less than 1.00, preferably from 0.10 to 0.80, more preferably from 0.15 to 0.75.

The ratio of $MFR_{2, final}$ to $MFR_{2, start}$ is less than 1.00, such as from 0.05 to less than 1.00, preferably from 0.10 to 0.80, more preferably from 0.15 to 0.75, which is an indication for a reactive modification reaction which results in crosslinking.

In the case of a vis-breaking reaction, which is a degradation reaction the ratio of $MFR_{2, final}$ to $MFR_{2, start}$ would be higher than 1.0.

It is preferred that the mixture of radical initiator and $HECO_{start}$ does not comprise a crosslinker, like a twofold unsaturated hydrocarbon compound having the general formula (I)

$$CH_2=CH-(R)-CH=CH_2 \qquad (I)$$

wherein

R may be present or absent, and if being present, R is an aliphatic or aromatic hydrocarbon group comprising from 1 to 6 carbon atoms, such as butadiene.

It is likewise preferred that the mixture of radical initiator and $HECO_{start}$ does not comprise any other compatibilizing agent comprising two or more functional groups capable of reacting with a free radical in a radical addition reaction.

The radical initiator is preferably organic peroxide, preferably selected from peroxycarbonates, more preferably from peroxydicarbonates, most preferably is dicetyl peroxydicarbonate.

Suitable organic peroxides meeting the required reaction profile can be commercially available, such as e.g. Perkadox 24L (Dicetyl peroxydicarbonate, CAS-No. 26322-14-5).

The radical initiator is preferably added to $HECO_{start}$ as a liquid. As most of the radical initiators are solid compounds, they may be dissolved in a liquid prior to addition.

After addition of the radical initiator to $HECO_{start}$, the components are preferably mixed to form a mixture, and preferably by contacting for a time of at least 2 minutes, preferably a time in the range of from 5 to 30 min, more preferably from 8 to 20 min, in order to reach

relative homogeneous absorption of the radical initiator by $HECO_{start}$.

In a preferred embodiment, the addition of step b) is performed in a flow-through reactor, such as a horizontal mixer with paddle stirrer, preferably in a continuous mode. $HECO_{start}$ and the radical initiator may be added in parallel streams into a flow-through reactor. Preferably, the flow-through reactor is a horizontal flow-through reactor, and the components may be transported through the reactor by means of transporting paddles. In this way, very efficient absorption of the radical initiator by $HECO_{start}$ is reached.

However, alternative other reactors may be used, where, for example, the radical initiator is added to a reactor after $HECO_{start}$ has been placed therein.

Step b) is preferably performed at a temperature in the range of from 20 to 90 °C, more preferably from 40 to 80 °C.

In step c) of the process of the present invention, the mixture comprising $HECO_{start}$ and the radical initiator is extruded at a temperature in the range of from 180 to 300 °C, preferably from 200 to 280 °C, to obtain a modified heterophasic propylene copolymer composition.

Extrusion may be carried out in any conventional way known in the art. Preferably, extrusion is carried out in a continuous melt mixing device like a single screw extruder, a co-rotating twin screw extruder or a co-kneader. The barrel temperature is preferably in the range of from 200 to 280 °C. The screw speed of the melt mixing device preferably is adjusted to a range of from 100 to 750 rotations per minute (rpm).

More preferably, the melt mixing device includes a feed zone, a kneading zone and a die zone and a specific temperature profile is maintained along the screw of the melt-mixing device, having an initial temperature T1 in the feed zone, a maximum temperature T2 in the kneading zone and a final temperature T3 in the die zone, all temperatures being defined as barrel temperatures. Barrel temperature T1 (in the feed zone) is preferably in the range of from 180 to 260 °C. Barrel temperature T2 (in the kneading zone) preferably is in the range of from 260 to 300 °C. Barrel temperature T3 (in the die zone) preferably is in the range of from 220 to 280 °C.

In a preferred embodiment, the process of the present invention is performed as a continuous process under the use of the flow-through reactors described above, and with direct transport of the mixture prepared in the step b) into an extruder to prepare the modified heterophasic propylene copolymer composition.

Subsequent to step c), the modified heterophasic propylene copolymer composition is preferably pelletized either in an underwater pelletizer or after solidification of one or more strands in a suitable pelletization process. Suitable pelletization processes include underwater pelletization, water-ring pelletization and strand pelletization, the latter comprising solidification of one or more melt strands in a water bath followed by cutting the strand into pellets.

During the process, further additives may be added to the mixture. In particular, common additives for preparation processes of polyolefins, such as modifiers, stabilizers, antistatic agents, lubricants, nucleating agents, foam nucleators, acid scavengers, UV stabilizers and slip agents may be added.

Thereby, it is preferred that additives like pigments, as well as fillers and reinforcement agents or other components, which are insoluble in hot xylene, are not added to the heterophasic propylene copolymer composition.

As a consequence, the XHU phase of the heterophasic propylene copolymer composition is obtained solely from the reactive modification in step c).

The starting heterophasic propylene copolymer resin (HECO$_{start}$) is preferably polymerized in a sequential multistage polymerization process, i.e. in a polymerization process in which two or more polymerization reactors are connected in series. Preferably, in the sequential multistage polymerization process, two or more, more preferably three or more, such as three or four, polymerization reactors are connected in series. The term "polymerization reactor" shall indicate that the main polymerization takes place. Thus, in case the process consists of three polymerization reactors, this definition does not exclude the option that the overall process comprises for instance a pre-polymerization step in a pre-polymerization reactor.

It is preferred that the matrix phase of HECO$_{start}$ is polymerized in first polymerization reactor for producing a unimodal matrix phase or in the first and second polymerization reactor for producing a multimodal matrix phase.

The elastomeric phase of HECO$_{start}$ is preferably polymerized in the subsequent one or two polymerization reactor(s) in the presence of the matrix phase for producing a unimodal elastomeric phase or a multimodal elastomeric phase.

Preferably, the polymerization reactors are selected from slurry phase reactors, such as loop reactors and/or gas phase reactors such as fluidized bed reactors, more preferably from loop reactors and fluidized bed reactors.

A preferred sequential multistage polymerization process is a "loop-gas phase"-process, such as developed by Borealis A/S, Denmark (known as BORSTAR® technology) described e.g. in patent literature, such as in EP 0 887 379, WO 92/12182

WO 2004/000899, WO 2004/111095, WO 99/24478, WO 99/24479 or in WO 00/68315.

A further suitable slurry-gas phase process is the Spheripol® process of LyondellBasell.

In a preferred embodiment HECO$_{start}$ is polymerized in a multistage polymerization process comprising the following steps:

- polymerizing propylene monomer units in a first polymerization reactor in the presence of a Ziegler Natta catalyst system to produce a first crystalline propylene polymer having a melt flow rate MFR$_2$, determined according to ISO 1133 at 230°C and 2.16 kg, of from 150 to 1000.0 g/10 min, preferably from 250 to 750 g/10 min, more preferably from 350 to 650 g/10 min;
- transferring a first reaction mixture comprising the crystalline propylene polymer and the Ziegler Natta catalyst system from the first polymerization reactor to a second polymerization reactor;
- polymerizing propylene monomer units in the second polymerization reactor in the presence of the first reaction mixture to produce a second crystalline propylene polymer in the presence of the first crystalline propylene polymer, wherein the mixture of the first crystalline propylene polymer and the second crystalline propylene polymer has a melt flow rate MFR$_2$, determined according to ISO 1133 at 230°C and 2.16 kg, of from 150 to 1000.0 g/10 min, preferably from 250 to 750 g/10 min, more preferably from 350 to 650 g/10 min;
- transferring a second reaction mixture comprising the first crystalline propylene polymer, the second crystalline propylene polymer and the Ziegler Natta catalyst system from the second polymerization reactor to a third polymerization reactor;
- polymerizing propylene monomer units and comonomer units, preferably ethylene monomer units in a molar ratio of comonomer units, preferably ethylene monomer units, to propylene monomer units (C2/C3) of from 1250 to 2250 mol/kmol, preferably from 1500 to 2100 mol/kmol, more preferably from 1650 to 2000 mol/kmol in the third polymerization reactor in the presence of the second reaction mixture to produce an elastomeric propylene copolymer;
- withdrawing a third reaction mixture comprising the first crystalline propylene polymer, the second crystalline propylene polymer, the elastomeric propylene copolymer and the Ziegler Natta catalyst system from the third polymerization reactor; and
- obtaining the starting heterophasic propylene copolymer resin (HECO$_{start}$).

The matrix phase of HECO$_{start}$ is preferably polymerized in first two polymerization reactors.

The elastomeric phase of HECO$_{start}$ is preferably polymerized in the subsequent polymerization reactor in the presence of the matrix phase.

Preferably, the polymerization reactors are selected from slurry phase reactors, such as loop reactors and/or gas phase reactors such as fluidized bed reactors, more preferably from loop reactors and fluidized bed reactors.

A preferred sequential multistage polymerization process is a "loop-gas phase"-process, such as developed by Borealis A/S, Denmark (known as BORSTAR® technology) described e.g. in patent literature, such as in EP 0 887 379, WO 92/12182

WO 2004/000899, WO 2004/111095, WO 99/24478, WO 99/24479 or in WO 00/68315.

A further suitable slurry-gas phase process is the Spheripol® process of LyondellBasell.

It is particularly preferred that the first polymerization reactor is a slurry phase reactor, more preferably a loop reactor.

It is preferred that the operating temperature in the first polymerization reactor, preferably the loop reactor, is in the range from 62 to 85 °C, more preferably in the range from 65 to 82 °C, still more preferably in the range from 67 to 80 °C.

Typically, the pressure in the first polymerization reactor, preferably in the loop reactor, is in the range from 20 to 80 bar, preferably 30 to 70 bar, like 35 to 65 bar.

In the first polymerization reactor, preferably the loop reactor, a propylene homopolymer is produced. Thus, the first propylene polymer fraction is a first propylene homopolymer fraction.

Preferably hydrogen is added in the first polymerization reactor in order to control the molecular weight, i.e. the melt flow rate $MFR_2$.

Preferably the hydrogen to propylene ratio (H2/C3 ratio) in the first polypropylene reactor, preferably the loop reactor, is in the range from 10 to 60 mol/kmol, more preferably 25 to 50 mol/kmol.

Due to the high amount of hydrogen, the melt flow rate of the first propylene polymer fraction is rather high.

It is preferred that the first propylene polymer fraction has a melt flow rate $MFR_2$ (230°C, 2.16 kg, ISO 1133) in the range of 150 to 1000.0 g/10 min, preferably from 250 to 750 g/10 min, more preferably from 350 to 650 g/10 min.

The second polymerization reactor preferably is a first gas phase reactor, such as a first fluidized bed gas phase reactor.

It is preferred that the operating temperature in the second polymerization reactor, preferably the first gas phase reactor, is in the range from 65 to 90 °C, more preferably in the range from 75 to 85 °C. Typically, the operating temperature in second polymerization reactor is higher than the operating temperature in the first polymerization reactor.

Typically, the pressure in the second polymerization reactor, preferably in the first gas phase reactor, is in the range from 5 to 50 bar, preferably 15 to 40 bar.

It is preferred that in the second polymerization reactor, preferably the first gas phase reactor, a propylene homopolymer is produced. Thus, it is preferred that the second propylene polymer fraction is a second propylene homopolymer fraction.

Preferably hydrogen is added in the second polymerization reactor in order to control the molecular weight, i.e. the melt flow rate $MFR_2$.

Preferably the hydrogen to propylene ratio (H2/C3 ratio) in the second polypropylene reactor, preferably the first gas phase reactor, is in the range from 50 to 500 mol/kmol, more preferably 100 to 400 mol/kmol.

It is preferred that the combined first and second propylene polymer fractions have a melt flow rate $MFR_2$ (230°C, 2.16 kg, ISO 1133) in the range of 150 to 1000.0 g/10 min, preferably from 250 to 750 g/10 min, more preferably from 350 to 650 g/10 min.

The third polymerization reactor preferably is a second gas phase reactor, such as a second fluidized bed gas phase reactor.

It is preferred that the operating temperature in the third polymerization reactor, preferably the second gas phase reactor, is in the range from 65 to 90 °C, more preferably in the range from 75 to 85 °C. Typically, the operating temperature in third polymerization reactor is comparable to the operating temperature in the second polymerization reactor.

Typically, the pressure in the third polymerization reactor, preferably in the second gas phase reactor, is in the range from 5 to 40 bar, preferably 10 to 30 bar.

In the third polymerization reactor, preferably the second gas phase reactor, an ethylene-propylene copolymer is produced. Thus, the third propylene polymer fraction is a first ethylene-propylene copolymer fraction.

The ethylene to propylene ratio (C2/C3 ratio) in the third polymerization reactor, preferably the second gas phase reactor, is in the range from 1250 to 2250 mol/kmol, preferably from 1500 to 2100 mol/kmol, more preferably from 1650 to 2000 mol/kmol. Due to the high ethylene to propylene ratio (C2/C3 ratio) the third propylene polymer fraction preferably is an elastomeric block copolymer with propylene rich sections and ethylene rich sections.

Preferably hydrogen is added in the third polymerization reactor in order to control the molecular weight, i.e. the melt flow rate $MFR_2$.

Preferably, the hydrogen to ethylene ratio (H2/C2 ratio) in the third polymerization reactor, preferably the second gas phase reactor, is in the range from 150 to 500 mol/kmol, more preferably 250 to 350 mol/kmol.

It is preferred that the combined first, second and third propylene polymer fractions have a melt flow rate $MFR_2$ (230°C, 2.16 kg, ISO 1133) in the range of 5.0 to 500.0 g/10 min, preferably from 25.0 to 475.0 g/10 min, more preferably from 50.0 to 450 g/10 min.

The combined first, second and third propylene polymer fractions preferably form the polymeric components of HECO$_{start}$.

The preparation of the first, second and third propylene polymer fractions can comprise in addition to the (main) polymerization stages in the at least three polymerization reactors prior thereto a pre-polymerization in a pre-polymerization reactor upstream to the first polymerization reactor.

In the pre-polymerization reactor, a polypropylene is produced. The pre-polymerization is preferably conducted in the presence of the Ziegler-Natta catalyst system. According to this embodiment, the Ziegler-Natta catalyst system is introduced to the pre-polymerization step. However, this shall not exclude the option that at a later stage for instance further co-catalyst is added in the polymerization process, for instance in the first polymerization reactor. In one embodiment, all components of the Ziegler-Natta catalyst system are only added in the pre-polymerization reactor, if a pre-polymerization is applied.

The pre-polymerization reaction is typically conducted at a temperature of 0 to 60 °C, preferably from 10 to 50 °C, and more preferably from 15 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, optionally with inert components dissolved therein.

It is possible to add other components also to the pre-polymerization stage. Thus, hydrogen may be added into the pre-polymerization stage to control the molecular weight of the polypropylene as is known in the art. Further, antistatic additives may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture of the Ziegler-Natta catalyst system and the polypropylene produced in the pre-polymerization reactor is obtained. Preferably, the Ziegler-Natta catalyst system is (finely) dispersed in the polypropylene. In other words, the Ziegler-Natta catalyst system introduced in the pre-polymerization reactor are split into smaller fragments that are evenly distributed within the growing polypropylene. The sizes of the introduced Ziegler-Natta catalyst system as well as of the obtained fragments are not of essential relevance for the instant invention and within the skilled knowledge.

As mentioned above, if a pre-polymerization is used, subsequent to said pre-polymerization, the mixture of the Ziegler-Natta catalyst system and the polypropylene produced in the pre-polymerization reactor is transferred to the first polymerization reactor. Typically the total amount of the polypropylene produced in the pre-polymerization reactor in the first, second and third propylene polymer fractions is rather low and typically not more than 5.0 wt.-%, more preferably not more than 4.0 wt.-%, still more preferably in the range from 0.5 to 4.0 wt.-%, like in the range 1.0 of to 3.0 wt.-%.

In case that pre-polymerization is not used, propylene and the other ingredients such as the Ziegler-Natta catalyst system are directly introduced into the first polymerization reactor.

The residence times of the polymerization mixtures in the different polymerization stages are adjusted to obtain the amounts of the first, second and third polymer fractions in the combined first, second and third polymer fractions.

The Ziegler-Natta catalyst system will be now described in more detail.

The catalyst as used for the present invention is

a) a Ziegler-Natta catalyst (ZN-C) comprising compounds (TC) of a transition metal of Group 4 to 6 of IUPAC, a Group 2 metal compound (MC) and an internal donor (ID), wherein said internal donor (ID) is a selected from

- optionally substituted malonates,
- maleates,
- succinates,
- glutarates,
- cyclohexene-1,2-dicarboxylates,
- benzoates and derivatives and/or mixtures thereof,
- citraconates

b) a co-catalyst (Co), and
c) optionally an external donor (ED).

Preferably, the internal donor (ID) is one or more citraconates and more preferably the molar-ratio of co-catalyst (Co) to external donor (ED) [Co/ED] is 5 to 45.

The Ziegler-Natta catalyst (ZN-C) can be further defined by the way as obtained. Accordingly, the Ziegler-Natta catalyst (ZN-C) is preferably obtained by a process comprising the steps of

a)

a$_1$) providing a solution of at least a Group 2 metal alkoxy compound (Ax) being the reaction product of a Group 2 metal compound (MC) and an alcohol (A) comprising in addition to the hydroxyl moiety at least one ether moiety optionally in an organic liquid reaction medium;

or

a$_2$) a solution of at least a Group 2 metal alkoxy compound (Ax') being the reaction product of a Group 2 metal compound (MC) and an alcohol mixture of the alcohol (A) and a monohydric alcohol (B) of formula ROH, optionally in an organic liquid reaction medium;

or

a$_3$) providing a solution of a mixture of the Group 2 alkoxy compound (Ax) and a Group 2 metal alkoxy compound (Bx) being the reaction product of a Group 2 metal compound (MC) and the monohydric alcohol (B), optionally in an organic liquid reaction medium; and

b) adding said solution from step a) to at least one compound (TC) of a transition metal of Group 4 to 6 and
c) obtaining the solid catalyst component particles,

and adding a non-phthalic internal electron donor (ID) at any step prior to step c).

The internal donor (ID) or precursor thereof is added preferably to the solution of step a).

According to the procedure above the Ziegler-Natta catalyst (ZN-C) can be obtained via precipitation method or via emulsion (liquid/liquid two-phase system) - solidification method depending on the physical conditions, especially temperature used in steps b) and c).

In both methods (precipitation or emulsion-solidification) the catalyst chemistry is the same.

In precipitation method combination of the solution of step a) with at least one transition metal compound (TC) in step b) is carried out and the whole reaction mixture is kept at least at 50 °C, more preferably in the temperature range of 55 to 110 °C, more preferably in the range of 70 to 100 °C, to secure full precipitation of the catalyst component in form of a solid particles (step c).

In emulsion - solidification method in step b) the solution of step a) is typically added to the at least one transition metal compound (TC) at a lower temperature, such as from - 10 to below 50 °C, preferably from -5 to 30 °C. During agitation of the emulsion the temperature is typically kept at -10 to below 40 °C, preferably from -5 to 30 °C. Droplets of the dispersed phase of the emulsion form the active catalyst composition. Solidification (step c) of the droplets is suitably carried out by heating the emulsion to a temperature of 70 to 150 °C, preferably to 80 to 110 °C.

The catalyst prepared by emulsion - solidification method is preferably used in the present invention.

In a preferred embodiment in step a) the solution of a$_2$) or a$_3$) are used, i.e. a solution of (Ax') or a solution of a mixture of (Ax) and (Bx).

Preferably the Group 2 metal (MC) is magnesium.

The magnesium alkoxy compounds (Ax), (Ax') and (Bx) can be prepared *in situ in* the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are monoethers of dihydric alcohols (glycol monoethers). Preferred alcohols (A) are C$_2$ to C$_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being straight-chain or branched C$_6$-C$_{10}$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 8:1 to 2:1, more preferably 5:1 to 3:1.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Alkyl groups can be a similar or different C$_1$-C$_{20}$ alkyl, preferably C$_2$-C$_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R''(OH)$_m$ to obtain said magnesium alkoxide compounds. Preferred polyhydric alcohols, if used, are alcohols, wherein R" is a straight-chain, cyclic or branched $C_2$ to $C_{10}$ hydrocarbon residue, and m is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylene, pentane, hexane, heptane, octane and nonane. Hexanes and pentanes are particular preferred.

Mg compound is typically provided as a 10 to 50 wt-% solution in a solvent as indicated above. Typical commercially available Mg compound, especially dialkyl magnesium solutions are 20 - 40 wt-% solutions in toluene or heptanes.

The reaction for the preparation of the magnesium alkoxy compound may be carried out at a temperature of 40 °C to 70 °C. Most suitable temperature is selected depending on the Mg compound and alcohol(s) used.

The transition metal compound of Group 4 to 6 is preferably a titanium compound, most preferably a titanium halide, like $TiCl_4$.

The internal donor (ID) used in the preparation of the catalyst used in the present invention is preferably selected from substituted maleates and citraconates. Most preferably the internal donor is citraconate.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with aromatic and/or aliphatic hydrocarbons, preferably with toluene, heptane or pentane. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 $\mu$m, preferably 10 to 100. Particles are compact with low porosity and have surface area below 20 $g/m^2$, more preferably below 10 $g/m^2$. Typically the amount of Ti is 1 to 6 wt.-%, Mg 10 to 20 wt.-% and donor 10 to 40 wt.-% of the catalyst composition.

Detailed description of preparation of catalysts is disclosed in WO 2012/007430, EP 2 415 790, EP 2 610 270, EP 2 610 271 and EP 2 610 272.

The Ziegler-Natta catalyst (ZN-C) is preferably used in association with an alkyl aluminum cocatalyst and optionally external donors.

As further component in the instant polymerization process an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$$R^a{}_p R^b{}_q Si(OR^c)_{(4-p-q)}$$

wherein $R^a$, $R^b$ and $R^c$ denote a hydrocarbon radical, in particular an alkyl or cycloalkyl group, and wherein p and q are numbers ranging from 0 to 3 with their sum p + q being equal to or less than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$^2$, (phenyl)$_2$Si(OCH$_3$)$_2$ and (cyclopentyl)$_2$Si(OCH$_3$)$_2$, or of general formula

$$Si(OCH_2CH_3)_3(NR^3R^4)$$

wherein $R^3$ and $R^4$ can be the same or different a represent a hydrocarbon group having 1 to 12 carbon atoms.

$R^3$ and $R^4$ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that $R^3$ and $R^4$ are independently selected from the group consisting of methyl, ethyl, n-propyl, n-butyl, octyl, decyl, iso-propyl, iso-butyl, iso-pentyl, tert.-butyl, tert.-amyl, neopentyl, cyclopentyl, cyclohexyl, methylcyclopentyl and cycloheptyl.

More preferably both $R^1$ and $R^2$ are the same, yet more preferably both $R^3$ and $R^4$ are an ethyl group.

Especially preferred external donors (ED) are the pentyl dimethoxy silane donor (D-donor) or the cyclohexylmethyl dimethoxy silane donor (C-Donor), the latter especially preferred.

In addition to the Ziegler-Natta catalyst (ZN-C) and the optional external donor (ED) a co-catalyst is used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Advantageously, the triethyl aluminium (TEAL) has a hydride content, expressed as $AlH_3$, of less than 1.0 wt% with respect to the triethyl aluminium (TEAL). More preferably, the hydride content is less than 0.5 wt%, and most preferably the hydride content is less than 0.1 wt%.

Preferably the ratio between the co-catalyst (Co) and the external donor (ED) [Co/ED] and/or the ratio between the co-catalyst (Co) and the transition metal (TM) [Co/TM] should be carefully chosen.

Accordingly,

(a) the mol-ratio of co-catalyst (Co) to external donor (ED) [Co/ED] preferably is in the range of 5 to 45, preferably is in the range of 5 to 40, more preferably is in the range of 5 to 35; and optionally
(b) the mol-ratio of co-catalyst (Co) to titanium compound (TC) [Co/TC] preferably is in the range of above 80 to 500, preferably is in the range of 100 to 450, still more preferably is in the range of 120 to 350.

In one embodiment an additional nucleating agent is introduced to the composition during the polymerization process of the polymeric components of the heterophasic polypropylene composition. The additional nucleating agent is preferably a polymeric nucleating agent, which is preferably produced by polymerizing a vinyl compound. The additional nucleating agent is preferably introduced to the heterophasic polypropylene composition by first polymerizing the vinyl compound, preferably vinylcycloalkane, as defined below, in the presence of the Ziegler-Natta catalyst system and the obtained reaction mixture of the polymer of the vinyl compound, preferably vinyl cyclohexane (VCH) polymer, and the catalyst system is then used for producing the polymeric components of the heterophasic polypropylene composition. The above incorporation of the polymeric nucleating agent to the heterophasic propylene copolymer (A) during the polymerization of the polymeric components of the heterophasic polypropylene composition is called herein as BNT-technology.

With regard to the BNT-technology reference is made to the international applications WO 99/24478, WO 99/24479 and particularly WO 00/68315. According to this technology a catalyst system, preferably a Ziegler-Natta procatalyst, can be modified by polymerizing a vinyl compound in the presence of the catalyst system, comprising in particular the special Ziegler-Natta procatalyst, an external donor and a cocatalyst, which vinyl compound has the formula:

$CH_2=CH-CHR^1R^2$

wherein $R^1$ and $R^2$, together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system or independently represent a linear or branched $C_4$-$C_{30}$ alkane, $C_4$-$C_{20}$ cycloalkane or $C_4$-$C_{20}$ aromatic ring. Preferably $R^1$ and $R^2$, together with the C-atom wherein they are attached to, form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer.

The polymerized vinyl compound acts as an alpha-nucleating agent. The weight ratio of vinyl compound to solid catalyst component in the modification step of the catalyst is preferably of up to 5 (5:1), preferably up to 3 (3:1) most preferably from 0.5 (1:2) to 2 (2:1). The most preferred vinyl compound is vinylcyclohexane (VCH).

The heterophasic propylene copolymer composition obtained from the process according to the process of the invention has a lower final melt flow rate $MFR_{2, final}$ than the starting heterophasic propylene copolymer resin ($HECO_{start}$).

Consequently, the ratio of $MFR_{2, final}$ to $MFR_{2, start}$ is less than 1.00, such as from 0.05 to less than 1.00, preferably from 0.10 to 0.80, more preferably from 0.15 to 0.75.

The heterophasic propylene copolymer composition obtained from the process according to the process of the invention additionally preferably shows a lower stiffness and higher impact strength compared to the starting heterophasic propylene copolymer resin ($HECO_{start}$).

It is preferred that the ratio of the final Charpy notched impact strength at 23°C of the heterophasic propylene copolymer composition to the Charpy notched impact strength of the starting heterophasic propylene copolymer resin ($HECO_{start}$) ($CNIS_{23°C, final}/CNIS_{23°C, start}$) is at least 1.50, such as from 1.50 to 2.50, preferably from 1.65 to 2.25, more preferably from 1.75 to 2.10.

Further, the ratio of the final Charpy notched impact strength at -20°C of the heterophasic propylene copolymer composition to the Charpy notched impact strength of the starting heterophasic propylene copolymer resin (HECO$_{start}$) (CNIS$_{-20°C, final}$/CNIS$_{-20°C, start}$) is preferably at least 1.75, such as from 1.75 to 3.50, more preferably from 1.90 to 3.25, still more preferably from 2.00 to 3.00.

Still further, the ratio of the final flexural modulus of the heterophasic propylene copolymer composition to the flexural of the starting heterophasic propylene copolymer resin (HECO$_{start}$) (FM$_{final}$/FM$_{start}$) is preferably from 0.50 to 0.95, more preferably from 0.65 to 0.92, still more preferably from 0.75 to 0.90.

Article

In a third aspect the present invention relates to an article, preferably an injection moulded article, more preferably an automotive article, comprising the heterophasic propylene copolymer composition as described above or below.

The article preferably comprises the heterophasic propylene copolymer composition in an amount of from 25 to 99.9 wt.-%.

In one embodiment the article preferably comprises the heterophasic propylene copolymer composition in an amount of from 90 to 99.9 wt.-%, more preferably from 95 to 99.9 wt.-%.

In said embodiment, the article preferably shows the same properties as described above or below for the heterophasic polypropylene composition.

In another embodiment, the article comprises the heterophasic propylene copolymer composition in an amount of from 25 to 75 wt.-%, preferably 30 to 50 wt.-%. In said embodiment, the heterophasic propylene copolymer composition is preferably blended with a further polymeric composition, such as e.g. a mixed plastics polyolefin recycling blend and optionally further non-polymeric components, such as fillers or flame retardants.

It is preferred that all aspects and embodiments of the heterophasic propylene copolymer composition and the process for producing the heterophasic polypropylene composition as described above and below also apply to the article of the third aspect of the invention.

Use

In a fourth aspect the present invention relates to the use of the heterophasic propylene copolymer composition as described above or below as impact booster for recyclate-based polyolefin compositions.

The reason for the use of the heterophasic propylene copolymer composition as described above or below as impact booster is that the heterophasic propylene copolymer composition after reactive modification preferably shows a higher Charpy notched impact strength at 23°C and -20°C compared to the starting heterophasic propylene copolymer resin (HECO$_{start}$).

Thereby, the heterophasic propylene copolymer composition as described above or below is preferably melt-blended with a mixed plastics polyolefin recycling blend and optionally further non-polymeric components, such as fillers or flame retardants.

Thereby, the amount of the heterophasic propylene copolymer composition as described above or below in said melt-blend is preferably from 25 to 75 wt.-%, preferably 30 to 50 wt.-%, based on the total amount of the melt blend of the heterophasic propylene copolymer composition, the a mixed plastics polyolefin recycling blend and optionally further non-polymeric components.

It is preferred that all aspects and embodiments of the heterophasic propylene copolymer composition, the process for producing the heterophasic propylene copolymer composition also apply to the use of the fourth aspect of the invention.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

**1. Determination methods**

The following definitions of terms and determination methods apply for the above general description of the invention including the claims as well as to the below examples unless otherwise defined.

## Quantification of microstructure by NMR spectroscopy

Quantitative nuclear-magnetic resonance (NMR) spectroscopy was used to quantify the comonomer and regiodefect content of the polymers.

Quantitative $^{13}C\{^1H\}$ NMR spectra were recorded in the solution-state using a Bruker Avance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in approximately 3 ml of *1,2*-tetrachloroethane-$d_2$ (TCE-$d_2$) along with chromium-(III)-acety-lacetonate (Cr(acac)$_3$) resulting in a 65 mM solution of relaxation agent in solvent {singh09}. To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme {zhou07,busico07}. A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present.

Characteristic signals corresponding to the incorporation of ethylene were observed {wang00, cheng84, randall89}.

The comonomer fraction was quantified using the method of Wang et. al. {wang00} through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to be not present. This approach reduced the overestimation of ethylene content for such systems and was achieved by reduction of the number of sites used to determine the absolute ethylene content. Through the use of this set of sites the corresponding integral equation becomes

$$p_S = I_A + (0.5 * I_B)$$

$$p_T = I_D + I_F + I_D$$

$$p = (p_S + p_T) / 2$$

$$e = 0.5 * (I_H + (0.5 * I_B))$$

$$f_E = e / (e + p)$$

using the same notation used in the article of Wang et. al. {wang00}.

The mole percent comonomer incorporation was calculated from the mole fraction:

$$E\ [mol\text{-}\%] = 100 * f_E$$

The weight percent comonomer incorporation was calculated from the mole fraction:

$$E\ [wt\%] = 100 * (\ f_E * 28.06\ ) / (\ (f_E * 28.06) + ((1\text{-}f_E) * 42.08)\ )$$

Characteristic signals corresponding to regio-defects were observed {resconi00, wang00}. The presence of isolated 2,1-erythro regio-defects was indicated by the presence of the two methyl sites at 17.7 and 17.2 ppm and confirmed by other characteristic sites. The presence of 2,1 regio-defect adjacent an ethylene unit was indicated by the two inequivalent $S\alpha\beta$ signals at 34.9 ppm and 34.7 ppm respectively and the $T\gamma\gamma$ at 34.1 ppm.

The amount of isolated 2,1-erythro regio-defects ($P_{21e\ isolated}$) was quantified using the average integral of the two characteristic methyl sites at 17.7 ($I_{e8}$) and 17.4 ($I_{e6}$) ppm respectively:

$$P_{21e\ isolated} = (\ I_{e6} + I_{e8}\ )\ /\ 2$$

The amount of 2,1 regio-defect adjacent to ethylene ($P_{E21}$) was quantified using the methine site at 34.1 ppm ($I_{T_{\gamma\gamma}}$):

$$P_{E21} = I_{T_{\gamma\gamma}}$$

The total amount of propene ($P_{total}$) was quantified based on the methyl region ($I_{CH3}$) between 23.0 and 19.9 ppm with correction undertaken for sites included in this region not related to propene insertion. The methyl group $P_{\gamma\gamma}$ resulting from 2,1 regio-defect adjacent to ethylene was already present in $I_{CH3}$:

$$P_{total} = I_{CH3} + 2 * P_{21e\ isolated}$$

The isolated 2,1-erythro regiodefects ($P_{21e\ isolated}$) was multiplied by 2 to take into account the two (2) propene units in the 2, 1-erythro regio-defects.

The mole percent of isolated 2,1-erythro regio-defects was quantified with respect to all propene:

$$[21e]\ mol\text{-}\% = 100 * P_{21e\ isolated} / P_{total}$$

The mole percent of 2,1 regio-defects adjacent to ethylene was quantified with respect to all propene:

$$[E21]\ mol\text{-}\% = 100 * P_{E21} / P_{total}$$

The total amount of 2,1 defects was quantified as following:

$$[21]\ mol\text{-}\% = [21e] + [E21]$$

Characteristic signals corresponding to other types of regio-defects (2,1-threo, 3,1 insertion) were not observed {resconi00}.

| | |
|---|---|
| zhou07 | Zhou, Z., Kuemmerle, R., Qiu, X., Redwine, D., Cong, R., Taha, A., Baugh, D. Winniford, B., J. Mag. Reson. 187 (2007) 225 |
| busico07 | Busico, V., Carbonniere, P., Cipullo, R., Pellecchia, R., Severn, J., Talarico, G., Macromol. Rapid Commun. 2007, 28, 1128 |
| resconi00 | Resconi, L., Cavallo, L., Fait, A., Piemontesi, F., Chem. Rev. 2000, 100, 1253 |
| wang00 | Wang, W-J., Zhu, S., Macromolecules 33 (2000), 1157 |
| cheng84 | Cheng, H. N., Macromolecules 17 (1984), 1950 |
| singh09 | Singh, G., Kothari, A., Gupta, V., Polymer Testing 28 5 (2009), 475 |
| randall89 | Randall, J. Macromol. Sci., Rev. Macromol. Chem. Phys. 1989, C29, 201. |

### Crystallization extraction (CRYSTEX)

Note: Crystallization extraction (CRYSTEX) analyses the polymeric part of each component, with non-polymeric parts, such as, any fillers or particulate pigments, not contributing to the reported CRYSTEX data presented.

Since the XHU fraction is not dissolved in 1,2,4-trichlorobenzene in the conditions described below, in the inventive heterophasic propylene copolymer compositions only the XHS fraction contributes to the reported CRYSTEX data presented.

### Determination of Crystalline and soluble fractions and their respective properties (iV and Ethylene content)

The crystalline (CF) and soluble fractions (SF) of the polypropylene (PP) compositions as well as the comonomer content and intrinsic viscosities of the respective fractions were analyzed by use of the Crystex (crystallization extraction) method. Potential instruments that can be used are Crystex QC or Crystex 42 (Polymer Char; Valencia, Spain). Details of the technique and the method can be found in literature (Ljiljana Jeremic, Andreas Albrecht, Martina Sandholzer & Markus Gahleitner (2020): Rapid characterization of high-impact ethylene-propylene copolymer composition by crystallization extraction separation: comparability to standard separation methods, International Journal of Polymer Analysis and Characterization, 25:8, 581-596).

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (IV) an online 2-capillary viscometer is used.

IR4 detector is a multiple wavelength detector measuring IR absorbance at two different bands (CH3 stretching vibration (centred at app. 2960 cm$^{-1}$) and the CH stretching vibration (2700-3000 cm$^{-1}$) that are serving for the determination of the concentration and the Ethylene content in Ethylene-Propylene copolymers. IR4 detector is calibrated with series of 8 EP copolymers with known Ethylene content in the range of 2 wt.-% to 69 wt.-% (determined by 13C-NMR) and each at various concentrations, in the range of 2 and 13mg/ml. To encounter for both features, concentration and ethylene content at the same time for various polymer concentration expected during Crystex analyses the following calibration equations were applied:

$$\text{Conc} = a + b \cdot \text{Abs(CH)} + c \cdot (\text{Abs(CH)})^2 + d \cdot \text{Abs(CH}_3) + e \cdot (\text{Abs(CH}_3)^2 + f \cdot \text{Abs(CH)} \cdot \text{Abs(CH}_3)$$

$$\text{CH}_3/1000C = a + b \cdot \text{Abs(CH)} + c \cdot \text{Abs(CH}_3) + d \cdot (\text{Abs(CH}_3)/\text{Abs(CH)}) + e \cdot (\text{Abs(CH}_3)/\text{Abs(CH)})^2$$

The constants a to f for equation 1 and a to e for equation 2 were determined by using least square regression analysis.

The CH$_3$/1000C is converted to the ethylene content in wt.-% using following relationship:

$$\text{wt.-\% (Ethylene in EP Copolymers)} = 100 - \text{CH}_3/1000TC \cdot 0.3 \qquad \text{(Equation 3)}$$

Amount of Soluble Fraction (SF) and Crystalline Fraction (CF) were correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. A linear calibration curve is used.

Intrinsic viscosity (iV) of the parent EP copolymer and its soluble and crystalline fractions were determined with a use of an online 2-capillary viscometer and were correlated to corresponding IV's determined by standard method in decalin according to ISO 1628-3. Calibration was achieved with various EP copolymers and PP polymers with iV = 2-4 dL/g. The determined calibration curve is linear.

The samples to be analyzed were weighed out in concentrations of 10 mg/ml to 20 mg/ml.

After automated filling of the vial with 1,2,4-TCB containing 250 mg/l 2,6-tert-butyl-4-methylphenol (BHT) as antioxidant, the sample was dissolved at 170°C until complete dissolution is achieved with either constant stirring or gentle shaking. To avoid sample degradation, polymer solution was blanketed with the N$_2$ atmosphere during dissolution.

For PP composition containing inorganic fillers or pigments or any other non-TCB soluble polymeric substances removal of these was required. This can be done by hot filtration prior injection.

A defined volume of the polymer solution was injected into the column filled with inert support where the crystallization of the sample and separation of the soluble fraction from the crystalline fraction was taking place. This process was repeated two times. During the first injection the whole sample was measured at high temperature, determining the iV [dl/g] and the C2 [wt.-%] of the PP composition. During the second injection the soluble fraction (at low temperature) and the crystalline fraction (at high temperature) with the crystallization cycle were measured (wt.-% SF, wt.-% C2, iV).

The C2 content of a fraction (B) produced in the presence of a fraction (A) is calculated using the measured values of the C2 content of fraction (A) and the mixture received after producing fraction (B) (final):

$$C2_{final} = C2_A \cdot weight\ fraction\ (A) + C2_B \cdot weight\ fraction\ (B)$$

**XHU fraction**

The xylene hot insoluble (XHU) fraction was determined according to EN 579. About 2.0 g of the polymer (m$_p$) was weighted and put in a mesh of metal, which was weighted, the total weight being represented by (m$_{p+m}$). The polymer in the mesh was extracted in a Soxhlet apparatus with boiling xylene for 5 hours. The eluent was then replaced by fresh xylene and boiling was continued for another hour. Subsequently, the mesh was dried and weighted again (m$_{XHU+m}$). The mass of the xylene hot insoluble (m$_{XHU}$) obtained by the formula m$_{XHU+m}$ - m$_m$ = m$_{XHU}$ was put in relation to the weight of

the polymer ($m_p$) to obtain the fraction of xylene insoluble $m_{XHU} / m_p$.

**Melt Flow Rate**

The melt flow rate (MFR) was determined according to ISO 1133 and was indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg. **Calculation** of melt flow rate $MFR_2$ (230 °C) of the polypropylene produced in the 1st gas phase reactor (GPR1):

$$MFR(PP2) = 10^{\left[\frac{\log(MFR(PP)) - w(PP1)\, x\, \log(MFR(PP1))}{w(PP2)}\right]}$$

wherein

w(PP1)    is the weight fraction [in wt.-%] of the polypropylene fraction produced in the loop reactor and the prepolymerization reactor,

w(PP2)    is the weight fraction [in wt.-%] of the polypropylene fraction produced in 1st gas phase reactor (GPR1),

MFR(PP1)    is the melt flow rate $MFR_2$ (230 °C) [in g/10min] of the polypropylene fraction taken from the loop reactor,

MFR(PP)    is the melt flow rate $MFR_2$ (230 °C) [in g/10min] of the polypropylene taken from the 1st gas phase reactor,

MFR(PP2)    is the calculated melt flow rate $MFR_2$ (230 °C) [in g/10min] of the polypropylene fraction produced in the 1st gas phase reactor (GPR1).

**Visbreaking Ratio**

The visbreaking ratio VR was calculated from the melt flow rate of the unmodified heterophasic propylene copolymer ($MFR_{2,\,start}$) and the melt flow rate of the rheologically modified heterophasic propylene copolymer ($MFR_{2,\,final}$) according to the following formula:

$$VR = \frac{MFR_{2,final}}{MFR_{2,start}}$$

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC was run according to ISO 11357 / part 3 / method C2 in a heat / cool / heat cycle with a scan rate of 10 °C/min in the temperature range of -30 to +225 °C. Crystallization temperatures ($T_{c1}$ and $T_{c2}$) and crystallization enthalpies ($H_{c1}$ and $H_{c2}$) were determined from the cooling step, while melting temperatures ($T_{m1}$ and $T_{m2}$) and melting enthalpies ($H_{m1}$ and $H_{m2}$) were determined from the second heating step.

**The glass transition temperature Tg and storage modulus E' at 23 °C, 60°C and 90°C** were determined by dynamic mechanical analysis according to ISO 6721-7. The measurements were done in torsion mode on compression moulded samples (40x10x1 mm³) between -100 °C and +150 °C with a heating rate of 2 °C/min and frequency of 1 Hz.

**Molar mass:**

Molar mass averages (Mz, Mw and Mn) and molecular weight distribution (MWD), i.e. Mw/Mn, were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i / M_i)}$$

$$M_w = \frac{\sum_{i=1}^{N} (A_i\, x\, M_i)}{\sum A_i}$$

$$M_z = \frac{\sum_{i=1}^{N}\left(A_i \ x \ M_i^2\right)}{\sum (A_i/M_i)}$$

where Ai and Mi are the chromatographic peak slice area and polyolefin molecular weight (MW).

A PolymerChar GPC instrument, equipped with infrared (IR) detector was used with 3 × Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 µL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

**The Flexural Modulus** was determined according to ISO 178 method A (3-point bending test) on 80 mm × 10 mm × 4 mm specimens. Following the standard, a test speed of 2 mm/min and a span length of 16 times the thickness was used. The testing temperature was 23±2 ° C. Injection moulding was carried out according to ISO 19069-2 using a melt temperature of 230 °C for all materials irrespective of material melt flow rate.

**Notched impact strength (NIS)**

The Charpy notched impact strength (NIS) was measured according to ISO 179 1eA at +23 °C or -20 °C, using injection moulded bar test specimens of $80 \times 10 \times 4$ mm$^3$ prepared in accordance with ISO 19069-2 using a melt temperature of 230 °C for all materials irrespective of material melt flow rate.

**The xylene soluble fraction at room temperature (XCS, wt.-%)**

The amount of the polymer soluble in xylene was determined at 25 °C according to ISO 16152; 5th edition; 2005-07-01.

**2. Preparation of heterophasic propylene copolymers**

**Catalyst**

The catalyst used in the polymerization process for the heterophasic propylene copolymers HECOL and HECO2 was a Ziegler-Natta catalyst as used in the inventive examples of WO 2016/066446 A1 and pre-polymerized with vinylcyclohexane to achieve nucleation with poly(vinylcyclohexane). Nucleation by prepolymerization with vinylcyclohexane is described in EP 2 960 256 B1 and EP 2 960 279 B1 in detail. Dicyclopentyl dimethoxy silane (donor D) was used as external donor and triethyl aluminium (TEAL) was used as co-catalyst.

**Polymerization**

The polymerization of HECOL and HECO2 was carried out in a Borstar pilot plant comprising a prepolymerization reactor, a loop reactor and two (or one) gas phase reactor(s). The polymerization conditions are also indicated in Table 1.

**Table 1:** Polymerization conditions of HECOL and HECO2

|  |  | HECO1 | HECO2 |
|---|---|---|---|
| **Prepoly** |  |  |  |
| Temperature | °C | 20 | 20 |
| Co/ED | mol/kmol | 30 | 30 |
| Co/Ti | mol/kmol | 200 | 200 |
| Residence time | min | 30 | 30 |
| **Loop (R1)** |  |  |  |
| Temperature | °C | 75 | 75 |
| Pressure | bar | 53 | 53 |

(continued)

| Loop (R1) | | | |
|---|---|---|---|
| $H_2/C_3$ ratio | mol/kmol | 36 | 1.5 |
| $C_2/C_3$ ratio | mol/kmol | 0 | 0 |
| $MFR_2$ | g/10min | 430 | 6.1 |
| C2 content | wt.-% | 0 | 0 |
| split | wt.-% | 52 | 60 |
| **1st GPR (R2)** | | | |
| Temperature | °C | 80 | 80 |
| Pressure | bar | 22 | 22 |
| $C_2/C_3$ ratio | mol/kmol | 0 | 45.6 |
| $H_2/C_3$ ratio | mol/kmol | 234 | 6.0 |
| $MFR_2$ | g/10min | 442 | 2.2 |
| $MFR_2$ of R2 fraction (calc.) | g/10min | 454 | 0.5 |
| C2 content | wt.-% | 0 | 3.2 |
| C2 content of R2 fraction (calc.) | wt.-% | 0 | 8.0 |
| XCS | wt.-% | 2.9 | 11.6 |
| split | wt.-% | 25 | 40 |
| **2nd GPR (R3)** | | | |
| Temperature | °C | 80 | - |
| Pressure | bar | 20 | - |
| $C_2/C_3$ ratio | mol/kmol | 1846 | - |
| $H_2/C_2$ ratio | mol/kmol | 290 | - |
| $MFR_2$ | g/10min | 101 | - |
| C2 content | wt.-% | 22.1 | - |
| C2 content of R2 fraction (calc.) | wt.-% | 96 | - |
| Split | wt.-% | 23 | - |

The reactor resins of HECOL and HECO2 were subjected to an extrusion step in a Coperion ZSK32 co-rotating twin screw extruder at 220°C and pelletized.

The properties of the compounded unreacted compositions HECO1start and HECO2start are listed in Table 2 below.

**Table 2:** Properties of HECO1start and HECO2start

| | | HECO1start | HECO2start |
|---|---|---|---|
| XCS | wt.-% | 22.6 | 11.6 |
| C2(XCS) | wt.-% | 68 | 23 |
| iV(XCS) | dl/g | 2.8 | 1.9 |
| $MFR_2$ | g/10min | 202 | 2.2 |
| Tm | °C | 165 | 165 |
| Tc | °C | 126 | 126 |

**3. Reactive modification**

Reactive modification of HECOL (for IE1 and CE2) and HECO2 (for CE4) was performed by pre-mixing the pellets with a respective amount of the selected peroxide and extruding the mixture without further additives in a Coperion ZSK18 twin-screw extruder at 200-230°C barrel temperature. The resulting polymer melt was solidified as strands in a water bath and pelletized. CE1 is HECOL without further compounding, and CE3 is HECO2 without further compounding.

POX1: Trigonox 101 ((2,5-Dimethyl-2,5-di(tert-butylperoxy)hexane, CAS-No. 78-63-7) with decomposition half-time of 1 h at 65°C and an active $O_2$-content of 2.8 wt.-% (POX1 was used as masterbatch on PP homopolymer powder with a peroxide concentration of 5 wt.-%)

POX2: Perkadox 24L (Dicetyl peroxydicarbonate, CAS-No. 26322-14-5) with decomposition half-time of 1 h at 134°C and an active $O_2$-content of 11.0 wt.-% (POX2 was used in pure form)

The compositions of the peroxide-modified heterophasic polypropylene compositions IE1 and CE1-CE4 as well as their melt flow rates before ($MFR_{2, start}$) and after reactive modification ($MFR_{2, final}$) and the vis-breaking ratio (VR) are listed in Table 3 below.

**Table 3:** Compositions of IE1 and CE1-CE4 with VR

|  | CE1 | CE2 | IE1 | CE3 | CE4 |
|---|---|---|---|---|---|
| **Composition** |  |  |  |  |  |
| HECOL [wt.-%] | 100 | 98.8 | 98.0 | - | - |
| HECO2 [wt.-%] | - | - | - | 100 | 99.0 |
| POX1 masterbatch [wt.-%] | - | 1.2 | - | - | - |
| POX2 [wt.-%] | - | - | 2.0 | - | 1.0 |
| **Melt flow rates / VR ratio** |  |  |  |  |  |
| $MFR_{2, start}$ [g/10 min] | 119.3 | 119.3 | 119.3 | 3.55 | 3.55 |
| $MFR_{2, final}$ [g/10 min] | 119.3 | 209 | 78.4 | 3.55 | 7.28 |
| Visbreaking ratio (VR) | 1 | 1.75 | 0.66 | 1 | 2.05 |

For IE1 a VR ratio below 1 is observed, which indicates a crosslinking reaction, whereas for CE2 and CE4 a VR higher than 1 is observed, which indicates a degradation due to vis-breaking.

The crosslinking reaction in IE1 is obtained without presence of a crosslinker such as butadiene as needed e.g. in WO 2023/222621, or a compatibilizing agent comprising two or more functional groups as needed in EP 3 347 389 B1.

The compositions of IE1 and CE1-CE4 show the following structural and mechanical properties as listed in Table 4 below. All Delta-values for flexural modulus, and Charpy impact strength indicate relative changes to the non-modified references, i.e. CE2 and IE1 to CE1 and CE4 to CE3:

**Table 4:** Properties of IE1 and CE1-CE4

|  | CE1 | CE2 | IE1 | CE3 | CE4 |
|---|---|---|---|---|---|
| XHU [wt.-%] | 0 | 0 | 2.54 | 0 | 0 |
| C2 total (CRYSTEX) [wt.-%] | 22.0 | 21.8 | 18.4 | 3.9 | 4.2 |
| iV total (CRYSTEX) [dl/g] | 1.3 | 1.1 | 1.2 | 2.3 | 1.9 |
| SF (CRYSTEX) [wt.-%] | 22.8 | 21.7 | 17.4 | 7.2 | 7.4 |
| C2(SF) (CRYSTEX) [wt.-%] | 60.2 | 58.3 | 54.8 | 23.6 | 21.4 |
| iV(SF) (CRYSTEX) [dl/g] | 1.9 | 1.5 | 1.6 | 1.3 | 1.0 |
| CF (CRYSTEX) [wt.-%] | 77.2 | 78.3 | 82.6 | 92.8 | 92.6 |
| C2(CF) (CRYSTEX) [wt.-%] | 11.2 | 11.6 | 10.8 | 2.7 | 2.6 |
| iV(CF) (CRYSTEX) [dl/g] | 1.1 | 1.0 | 1.2 | 2.3 | 1.9 |

(continued)

| | CE1 | CE2 | IE1 | CE3 | CE4 |
|---|---|---|---|---|---|
| $T_{m1}$ [°C] | 164.8 | 163.2 | 163.0 | 163.9 | 163.2 |
| $T_{m2}$ [°C] | 121.9 | 121.4 | 121.5 | 133.0 | 133.0 |
| $T_{c1}$ [°C] | 128.3 | 128.2 | 127.4 | 126.9 | 127.6 |
| $T_{c2}$ [°C] | 106.5 | 106.7 | 109.4 | - | - |
| $H_{m1}$ [J/g] | 92.6 | 92.6 | 121.5 | 91.6 | 93.1 |
| $H_{m2}$ [J/g] | 10.50 | 10.82 | 9.47 | <1 | <1 |
| $H_{c1}$ [J/g] | 90.8 | 90.3 | 89.5 | 91.8 | 90.4 |
| $H_{c2}$ [J/g] | 8.2 | 8.2 | 9.1 | - | - |
| Storage modulus E', 23°C [MPa] | 699 | 781 | 577 | 649 | 656 |
| Storage modulus E', 60°C [MPa] | 382 | 416 | 282 | 309 | 309 |
| Storage modulus E', 90°C [MPa] | 232 | 252 | 170 | 167 | 167 |
| $T_{g1}$ [°C] | -51.0 | -50.3 | -50.3 | -55.3 | -50.2 |
| $T_{g2}$ [°C] | 0.6 | -0.5 | 0.8 | -2.91 | -3.03 |
| Mw (XCU) [kg/mol] | 104 | 88 | 152 | 336 | 266 |
| Mn (XCU) [kg/mol] | 21.2 | 21.3 | 21.8 | 50.4 | 52.9 |
| Mw/Mn (XCU) [-] | 4.9 | 4.1 | 7.0 | 6.7 | 5.0 |
| Mw (XCS) [kg/mol] | 137 | 112 | 198 | 298 | n.d. |
| Mn (XCS) [kg/mol] | 39.7 | 38.0 | 28.9 | 43.0 | n.d. |
| Mw/Mn (XCS) [-] | 3.5 | 3.0 | 6.9 | 6.9 | n.d. |
| Flexural modulus (FM) [MPa] | 1251 | 1171 | 1033 | 1161 | 1163 |
| Delta FM [%] | - | -6.4 | -17.4 | - | 0.2 |
| NIS, 23°C [kJ/m$^2$] | 1.72 | 1.09 | 3.37 | 9.47 | 8.55 |
| Delta NIS, 23°C [%] | - | -36.6 | 95.9 | - | -9.7 |
| NIS, -20°C [kJ/m$^2$] | 1.08 | 1.00 | 2.29 | 0.95 | 0.95 |
| Delta NIS, -20°C [%] | - | -7.4 | 112.0 | - | 0 |

Since in CRYSTEX analysis the XHU content of a composition is not solved in 1,2,4-trichlorobenzene in the modified composition of IE1 the CRYSTEX analysis only analyses the composition of the xylene hot soluble (XHS) fraction.

From the comparatively low C2 total content it can be seen that a considerable amount of ethylene copolymer of modified composition IE1 has been crosslinked to such a degree that it is not found in the XHS fraction via CRYSTEX analysis.

Crosslinking in the modified composition IE1 can also be identified by the higher Mw value in contrast to the lower Mw values of the modified compositions of CE2 and CE4, which indicate degradation via vis-breaking.

Modified composition IE1 shows a reduced flexural modulus but increased Charpy impact strength at 23°C and -20°C compared to the unmodified composition of CE1. IE1 thus can serve as impact booster when introduced to polypropylene compositions.

## Claims

1. A heterophasic propylene copolymer composition comprising a content of a fraction insoluble in hot xylene (XHU fraction), determined according to EN 579, of at least 1.5 wt.-%, such as from 1.5 to 10.0 wt.-%, preferably from 1.7 to 7.5 wt.-%, more preferably from 2.0 to 5.0 wt.-%, based on the total weight of the heterophasic propylene copolymer composition; and

a fraction soluble in hot xylene (XHS fraction), determined according to EN 579, whereby the XHU fraction and the XHS fraction make up 100 wt.-% of the heterophasic propylene copolymer composition;

wherein the XHS fraction has

a content of soluble fraction (SF), determined by crystallization extraction (CRYSTEX), of from 12.0 to 35.0 wt.-%, preferably from 13.5 to 32.5 wt.-%, more preferably from 14.5 to 30.0 wt.-%, based on the total weight of the XHS fraction, said soluble fraction has a comonomer content, preferably an ethylene content (C2(SF)), determined from crystallization extraction (CRYSTEX) calibrated by $^{13}$C NMR spectroscopy, of from 43.0 to 70.0 wt.-%, preferably from 45.0 to 67.5 wt.-%, more preferably from 47.5 to 65.0 wt.-%, based on the total weight of the soluble fraction, and

the heterophasic propylene copolymer composition has a melt flow rate $MFR_2$, determined according to ISO 1133 at 230°C and 2.16 kg, of from 1.0 to 100.0 g/10 min, preferably from 5.0 to 95.0 g/10 min, more preferably from 8.0 to 90.0 g/10 min.

2. The heterophasic propylene copolymer composition according to claim 1, wherein the soluble fraction (SF) has an intrinsic viscosity (iV(SF)) determined from crystallization extraction (CRYSTEX), of from 1.0 to 3.0 dl/g, preferably from 1.2 to 2.5 dl/g, more preferably from 1.4 to 2.0 dl/g.

3. The heterophasic propylene copolymer composition according to claims 1 or 2, wherein the XHS fraction has a content of crystalline fraction (CF), determined by crystallization extraction (CRYSTEX), of from 65.0 to 88.0 wt.-%, preferably from 67.5 to 86.5 wt.-%, more preferably from 70.0 to 85.5 wt.-%, based on the total weight of the XHS fraction, wherein the crystalline fraction has a comonomer content, preferably an ethylene content (C2(CF)), determined from crystallization extraction (CRYSTEX) calibrated by $^{13}$C NMR spectroscopy, of from 2.5 to 17.5 wt.-%, preferably from 3.5 to 16.0 wt.-%, more preferably from 4.5 to 15.0 wt.-%, based on the total weight of the soluble fraction, and/or an intrinsic viscosity (iV(CF)), determined from crystallization extraction (CRYSTEX), of from 0.5 to 2.0 dl/g, preferably from 0.7 to 1.8 dl/g, more preferably from 0.9 to 1.6 dl/g.

4. The heterophasic propylene copolymer composition according to any one of the preceding claims, wherein the XHS fraction has one or more or all of the following properties:

   • a total comonomer content, preferably a total ethylene content, determined from crystallization extraction (CRYSTEX) calibrated by $^{13}$C NMR spectroscopy, of from 5.0 to 30.0 wt.-%, preferably from 7.5 to 27.5 wt.-%, more preferably from 10.0 to 25.0 wt.-%;
   • a total intrinsic viscosity (iV), determined from crystallization extraction (CRYSTEX), of from 0.5 to 2.2 dl/g, preferably from 0.7 to 2.0 dl/g, more preferably from 0.9 to 1.8 dl/g.

5. The heterophasic propylene copolymer composition according to any one of the preceding claims having one or more or all of the following properties:

   • a melting temperature Tm, determined by DSC analysis according to ISO 11357, of from 155.0 to 175.0°C, preferably from 157.5 to 172.5°C, more preferably from 160.0 to 170.0°C;
   • a crystallization temperature Tc, determined by DSC analysis according to ISO 11357, of from 115.0 to 135.0°C, preferably from 117.5 to 132.5°C, more preferably from 120.0 to 130.0°C;
   • a first glass transition temperature Tg1, determined by DTMA analysis according to ISO 6721-7 of from -5.0 to 5.0°C, preferably from -2.5 to 3.5°C, more preferably from 0.0 to 2.5°C;
   • a second glass transition temperature Tg2, determined by DTMA analysis according to ISO 6721-7 of from -57.5 to -42.5°C, preferably from -55.0 to - 45.0°C, more preferably from -52.5 to -47.5°C;
   • a storage modulus E', determined by DTMA analysis according to ISO 6721-7 at 23°C of from 350 to 650 MPa, preferably from 400 to 625 MPa, more preferably from 450 to 600 MPa.

6. The heterophasic propylene copolymer composition according to any one of the preceding claims having one or more or all of the following properties:

   • a flexural modulus, determined according to ISO 178, of from 850 to 1250 MPa, preferably from 900 to 1150 MPa, more preferably from 950 to 1100 MPa;
   • a Charpy notched impact strength, determined according to ISO 179 1eA at 23°C of from 1.5 to 10.0 kJ/m$^2$, preferably from 2.0 to 8.5 kJ/m$^2$, more preferably from 2.5 to 7.0 kJ/m$^3$;
   • a Charpy notched impact strength, determined according to ISO 179 1eA at-20°C of from 0.5 to 6.5 kJ/m$^2$, preferably from 1.0 to 5.0 kJ/m$^2$, more preferably from 1.5 to 4.0 kJ/m$^2$.

7. A process for producing a heterophasic propylene copolymer composition according to any one of the preceding claims comprising the steps of:

    a) providing a starting heterophasic propylene copolymer resin ($HECO_{start}$) having

        • a melt flow rate $MFR_{2, start}$, determined according to ISO 1133 at 230°C and 2.16 kg, of from 5.0 to 500 g/10 min, preferably from 25.0 to 475 g/10 min, more preferably from 50.0 to 450 g/10 min,
        • a content of soluble fraction (SF), determined by crystallization extraction (CRYSTEX), of from 12.5 to 35.0 wt.-%, preferably from 15.0 to 32.5 wt.-%, more preferably from 16.5 to 30.0 wt.-%, based on the total weight of $HECO_{start}$;
        • a comonomer content of said soluble fraction, preferably an ethylene content of said soluble fraction (C2(SF)), determined from crystallization extraction (CRYSTEX) calibrated by $^{13}C$ NMR spectroscopy, of from 45.0 to 75.0 wt.-%, preferably from 50.0 to 72.5 wt.-%, more preferably from 52.5 to 70.0 wt.-%, based on the total weight of the soluble fraction; and
        • no detectable fraction insoluble in hot xylene (XHU fraction), determined according to EN 579;

    b) adding a radical initiator in an effective amount of from 0.001 to 1.500 wt.-%, preferably from 0.005 to 1.000 wt.-%, more preferably from 0.010 to 0.750 wt.-%, based on the total weight of the mixture of radical initiator and $HECO_{start}$, to $HECO_{start}$ to provide a mixture of radical initiator and $HECO_{start}$, whereby the radical initiator has

        • a decomposition half-time of 1 h at less than 100°C, such as at 30 to less than 100°C, preferably at 40 to 90°C, more preferably at 50 to 75°C; and
        • an active oxygen content of less than 10.0%, such as from 1.0 to less than 10.0%, preferably from 2.0 to 8.5%, more preferably from 2.5 to 7.5%;

    c) extruding the mixture of radical initiator and $HECO_{start}$ to obtain the heterophasic propylene copolymer composition having a final melt flow rate $MFR_{2, final}$, determined according to ISO 1133 at 230°C and 2.16 kg, of from 1.0 to 100.0 g/10 min, preferably from 5.0 to 95.0 g/10 min, more preferably from 8.0 to 90.0 g/10 min,

wherein the ratio of $MFR_{2, final}$ to $MFR_{2, start}$ is less than 1.00, such as from 0.05 to less than 1.00, preferably from 0.10 to 0.80, more preferably from 0.15 to 0.75.

8. The process according to claim 7, wherein the mixture of radical initiator and $HECO_{start}$ does not comprise a twofold unsaturated hydrocarbon compound having the general formula (I)

$$CH_2=CH-(R)-CH=CH_2 \qquad (I)$$

wherein

    R may be present or absent, and if being present, R is an aliphatic or aromatic hydrocarbon group comprising from 1 to 6 carbon atoms,
    or any other compatibilizing agent comprising two or more functional groups capable of reacting with a free radical in a radical addition reaction.

9. The process according to claims 7 or 8, wherein the compounding step is conducted in a melt mixer, preferably a single-screw extruder or twin-screw extruder, at a temperature of from 180 to 280°C.

10. The process according to claims 7 or 8, wherein the starting heterophasic propylene copolymer resin ($HECO_{start}$) is polymerized in a multistage polymerization process comprising the following steps:

    • polymerizing propylene monomer units in a first polymerization reactor in the presence of a Ziegler Natta catalyst system to produce a first crystalline propylene polymer having a melt flow rate $MFR_2$, determined according to ISO 1133 at 230°C and 2.16 kg, of from 150 to 1000.0 g/10 min, preferably from 250 to 750 g/10 min, more preferably from 350 to 650 g/10 min;
    • transferring a first reaction mixture comprising the crystalline propylene polymer and the Ziegler Natta catalyst system from the first polymerization reactor to a second polymerization reactor;
    • polymerizing propylene monomer units in the second polymerization reactor in the presence of the first reaction mixture to produce a second crystalline propylene polymer in the presence of the first crystalline propylene polymer, wherein the mixture of the first crystalline propylene polymer and the second crystalline propylene polymer has a melt flow rate $MFR_2$, determined according to ISO 1133 at 230°C and 2.16 kg, of from 150 to 1000.0 g/10 min, preferably from 250 to 750 g/10 min, more preferably from 350 to 650 g/10 min;

• transferring a second reaction mixture comprising the first crystalline propylene polymer, the second crystalline propylene polymer and the Ziegler Natta catalyst system from the second polymerization reactor to a third polymerization reactor;

• polymerizing propylene monomer units and comonomer units, preferably ethylene monomer units in a molar ratio of comonomer units, preferably ethylene monomer units, to propylene monomer units (C2/C3) of from 1250 to 2250 mol/kmol, preferably from 1500 to 2100 mol/kmol, more preferably from 1650 to 2000 mol/kmol in the third polymerization reactor in the presence of the second reaction mixture to produce an elastomeric propylene copolymer;

• withdrawing a third reaction mixture comprising the first crystalline propylene polymer, the second crystalline propylene polymer, the elastomeric propylene copolymer and the Ziegler Natta catalyst system from the third polymerization reactor; and

• obtaining the starting heterophasic propylene copolymer resin ($HECO_{start}$).

11. The process according to any one of claims 7 to 10, wherein the Ziegler Natta catalyst system comprises

b) a Ziegler-Natta catalyst (ZN-C) comprising compounds (TC) of a transition metal of Group 4 to 6 of IUPAC, a Group 2 metal compound (MC) and a non-phthalic internal donor (ID), wherein said non-phthalic internal donor (ID) is a selected from

- optionally substituted malonates,
- maleates,
- succinates,
- glutarates,
- cyclohexene-1,2-dicarboxylates,
- benzoates and derivatives and/or mixtures thereof,
- citraconates

b) a co-catalyst (Co), and
c) optionally an external donor (ED),

wherein the Ziegler-Natta catalyst (ZN-C) is preferably modified by prepolymerizing with a vinyl compound of formula (II)

$$CH_2=CH-CHR^1R^2 \qquad (II)$$

wherein $R^1$ and $R^2$ together form a 5- or 6-membered saturated, unsaturated or aromatic ring, optionally containing substituents, or independently represent an alkyl group comprising 1 to 4 carbon atoms, whereby in case $R^1$ and $R^2$ form an aromatic ring, the hydrogen atom of the $-CHR^1R^2$ moiety is not present.

12. The process according to any one of claims 7 to 11, wherein the radical initiator is an organic peroxide, preferably selected from peroxycarbonates, more preferably from peroxydicarbonates, most preferably is dicetyl peroxydicarbonate.

13. The process according to any one of claims 7 to 12, wherein the ratio of the final Charpy notched impact strength at 23°C of the heterophasic propylene copolymer composition to the Charpy notched impact strength of the starting heterophasic propylene copolymer resin ($HECO_{start}$) ($CNIS_{23°C, final}/CNIS_{23°C, start}$) is at least 1.50, such as from 1.50 to 2.50, preferably from 1.65 to 2.25, more preferably from 1.75 to 2.10; and/or the ratio of the final Charpy notched impact strength at -20°C of the heterophasic propylene copolymer composition to the Charpy notched impact strength of the starting heterophasic propylene copolymer resin ($HECO_{start}$) ($CNIS_{-20°C, final}/CNIS_{-20°C, start}$) is at least 1.75, such as from 1.75 to 3.50, preferably from 1.90 to 3.25, more preferably from 2.00 to 3.00; and/or the ratio of the final flexural modulus of the heterophasic propylene copolymer composition to the flexural of the starting heterophasic propylene copolymer resin ($HECO_{start}$) ($FM_{final}/FM_{start}$) is from 0.50 to 0.95, preferably from 0.65 to 0.92, more preferably from 0.75 to 0.90.

14. An article, preferably an injection moulded article, more preferably an automotive article, comprising the heterophasic propylene copolymer composition according to any one of the preceding claims.

15. The use of the heterophasic propylene copolymer composition according to any one of claims 1 to 13 as impact booster for recyclate-based polyolefin compositions.

Europäisches
Patentamt

European
Patent Office

Office européen
des brevets

**EUROPEAN SEARCH REPORT**

Application Number

EP 24 19 9470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/349735 A1 (REMERIE KLAAS [NL] ET AL) 7 December 2017 (2017-12-07)<br>* examples CE31, CE33; table 3 *<br>* paragraph [0066] - paragraph [0067]; example P2; table 1 *<br>* paragraph [0068] - paragraph [0074] * | 1-15 | INV.<br>C08F210/06<br>C08F8/00<br><br>ADD.<br>C08F2/00<br>C08F4/649 |
| A | EP 0 202 588 A2 (MITSUBISHI PETROCHEMICAL CO [JP]) 26 November 1986 (1986-11-26)<br>* page 21; example 2; table 1 *<br>* page 12, line 35 - page 14, line 25; example 2 *<br>* page 22; examples comp. ex-2; table 1 *<br>* claims 1,3,4,6,8,10,11,14,15 * | 1-15 | |

TECHNICAL FIELDS
SEARCHED      (IPC)

C08F

The present search report has been drawn up for all claims

| Place of search | Date of completion of the search | Examiner |
|---|---|---|
| Munich | 14 March 2025 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 9470

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2025

| Patent document cited in search report | Publication date | Patent family member(s) | Publication date |
|---|---|---|---|
| US 2017349735 A1 | 07-12-2017 | CN 107109001 A<br>EP 3234007 A1<br>EP 3868824 A1<br>US 2017349735 A1<br>WO 2016097107 A1 | 29-08-2017<br>25-10-2017<br>25-08-2021<br>07-12-2017<br>23-06-2016 |
| EP 0202588 A2 | 26-11-1986 | EP 0202588 A2<br>JP S61264043 A | 26-11-1986<br>21-11-1986 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1244717 B1
- EP 1781736 B1
- WO 2023222621 A1
- EP 3347389 B1
- EP 0887379 A
- WO 9212182 A
- WO 2004000899 A
- WO 2004111095 A
- WO 9924478 A
- WO 9924479 A
- WO 0068315 A
- WO 2012007430 A
- EP 2415790 A
- EP 2610270 A
- EP 2610271 A
- EP 2610272 A
- WO 2016066446 A1
- EP 2960256 B1
- EP 2960279 B1
- WO 2023222621 A

**Non-patent literature cited in the description**

- **HANS ZWEIFEL**. Plastic Additives Handbook. 2009, 1141-1190
- *CHEMICAL ABSTRACTS*, 26322-14-5
- **ZHOU, Z.** ; **KUEMMERLE, R.** ; **QIU, X.** ; **REDWINE, D.** ; **CONG, R** ; **TAHA, A.** ; **BAUGH, D.** ; **WINNIFORD, B.** *J. Mag. Reson.*, 2007, vol. 187, 225
- **BUSICO, V.** ; **CARBONNIERE, P** ; **CIPULLO, R** ; **PELLECCHIA, R.** ; **SEVERN, J.** ; **TALARICO, G**. *Macromol. Rapid Commun.*, 2007, vol. 28, 1128
- **RESCONI, L** ; **CAVALLO, L** ; **FAIT, A** ; **PIEMONTESI, F**. *Chem. Rev.*, 2000, vol. 100, 1253
- **WANG, W-J.** ; **ZHU, S**. *Macromolecules*, 2000, vol. 33, 1157
- **CHENG, H. N**. *Macromolecules*, 1984, vol. 17, 1950
- **SINGH, G.** ; **KOTHARI, A.** ; **GUPTA, V**. *Polymer Testing*, 2009, vol. 28 (5), 475
- **RANDALL, J**. *Macromol. Sci., Rev. Macromol. Chem. Phys.*, 1989, vol. C29, 201
- **LJILJANA JEREMIC** ; **ANDREAS ALBRECHT** ; **MARTINA SANDHOLZER** ; **MARKUS GAHLEITNER**. Rapid characterization of high-impact ethylene-propylene copolymer composition by crystallization extraction separation: comparability to standard separation methods. *International Journal of Polymer Analysis and Characterization*, 2020, vol. 25 (8), 581-596
- *CHEMICAL ABSTRACTS*, 78-63-7